(19) Europäisches Patentamt
European Patent Office
Office européen des brevets

(11) **EP 2 701 299 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
***H02M 5/458*** *(2006.01)*

(21) Anmeldenummer: **13004051.2**

(22) Anmeldetag: **14.08.2013**

(54) **Verfahren und Vorrichtung zum Zwischenspeichern elektrischer Engerie**

Method and device for the intermediate storage of electrical energy

Procédé et dispositif de stockage intermédiaire d'énergie électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2012 DE 102012016700**

(43) Veröffentlichungstag der Anmeldung:
**26.02.2014 Patentblatt 2014/09**

(73) Patentinhaber: **Michael Koch GmbH
76698 Ubstadt-Weiher (DE)**

(72) Erfinder: **Koch, Michael
76698 Ubstadt-Weiher (DE)**

(74) Vertreter: **Lichti - Patentanwälte Partnerschaft mbB
Postfach 41 07 60
76207 Karlsruhe (DE)**

(56) Entgegenhaltungen:
**EP-A2- 2 045 904       CN-A- 102 195 284
US-A1- 2010 192 788**

**Beschreibung**

Die Erfindung betrifft ein Verfahren zum Zwischenspeichern elektrischer Energie *nach dem Oberbegriff des Anspruchs 1 und* eine *entsprechende* Vorrichtung *nach dem Oberbegriff des Anspruchs 10.*

Der Zwischenkreis ist ein Gleichspannungs-Zwischenkreis, verkürzt wird er lediglich als Zwischenkreis bezeichnet.

Das gattungsgemäße Verfahren und die Vorrichtung sind beispielsweise aus der EP 2 372 892 A1 und der deutschen Patentanmeldung DE 10 2011 121 154.7 bekannt, die beide ebenfalls vollinhaltlich Gegenstand der Offenbarung der vorliegenden Anmeldung sind. Die EP 2 372 892 A1 zeigt eine - dynamische - Energiespeichereinrichtung (DES) zum Anschluss an einen Zwischenkreis eines Wechselrichters und zur Zwischenspeicherung elektrischer Bremsenergie eines an dem Wechselrichter betriebenen Motors sowie ein Verfahren zum Zwischenspeichern elektrischer Bremsenergie des an einem Wechselrichter mit Zwischenkreis betriebenen Motors. Ein solcher elektrischer Zwischen-Energiespeicher, insbesondere in Form eines Kondensators, wie er in der genannten Druckschrift beschrieben ist, dient zur Aufnahme und Zwischenspeicherung von Bremsenergie eines Elektromotors, um diese nicht beispielsweise über einen Bremswiderstand vollständig (durch Umwandlung in Wärme) zu verlieren, sondern zumindest zum Teil in der motorischen Arbeitsphase des Elektromotors diesem wieder zur Verfügung zu stellen, insbesondere beim Anfahren und/oder Beschleunigen, um so den gesamten Energieeinsatz - gegenüber dem vollständigen Verlust der Bremsenergie durch Umwandlung in Wärme in einem Widerstand - zu reduzieren.

Dabei sollte im Normal- oder Regelbetrieb ein geeignetes Energiemanagement betrieben werden, wie es in der EP 2 372 892 A1, insbesondere aber auch in der DE 10 2011 121 154.7 im Einzelnen beschrieben ist. Zum einen sollte im regulären motorischen und generatorischen Betrieb (letzteres bei Abbremsen der an den Zwischenkreis angeschlossenen Last bzw. des Motors) eine vorgegebene reguläre zulässige Spannung am Zwischenspeicher $U_{cmaxDES}$ nicht überschritten werden, um eine Überbelastung und Zerstörung des Zwischenspeichers, der in der Regel ein Kondensator ist, zu vermeiden, zum anderen sollte ein gewisser Minimalwert des Zwischenspeichers nicht unterschritten werden, der für ein bestimmtes System fest vorgegeben werden kann (EP 2 372 892 A1) oder aber vorzugsweise, um bei gegebenem Betriebsverhalten eine möglichst große Ausnutzung des Zwischenspeichers zu erreichen, dynamisch geregelt werden kann (DE 10 2011 121 154.7). Eine derartige schon aus der EP 2 372 892 A1 dem Grunde nach bekannte Vorrichtung bildet ein aktives Puffermodul für den Gleichstromzwischenkreis und wird als dynamischer Energiespeicher bezeichnet, wobei die Dynamik sich darauf bezieht, dass im regulären Betrieb je nach motorischer oder generatorischer Phase Energie an den Zwischenkreis und damit die Last (Motor) abgegeben bzw. aufgenommen wird.

Neben der beim regulären Betrieb oder Regelbetrieb einer Last, wie eines Motors beispielsweise bei Anfahren, Beschleunigen und Bremsen gegebenen unterschiedlichen Leistungsanforderungen bzw. -abgaben und damit Spannungsänderungen besteht bei der Versorgung eines Motors aus einem elektrischen Versorgungsnetz die Gefahr eines Spannungsabfalls im Netz, so dass der Motor nicht mehr seinen geordneten Betrieb ausführen kann und aufgrund eines VersorgungsNetz-Ab- oder Ausfalls zu einem ungünstigen Zeitpunkt und in einer ungünstigen Position, ggf. auch in gefährlicher Weise zum Stillstand kommt. Zur Überbrückung entsprechender Spannungseinbrüche im Netz und/oder um einen Elektromotor in geeigneter Weise gesteuert vor Stillsetzen in eine gewünschte Position zu verfahren und erst in einer gewünschten Position still zu setzen, sind sogenannte unterbrechungsfreie Stromversorgungen (USV), auch als dynamische Energieversorgung (DEV) bezeichnet, bekannt. Ein Bespiel ist die Vermeidung eines Anhaltens eines Aufzugs zwischen Geschossen und vielmehr das Verfahren und Stillsetzen zum nächsten Stockwerk in Fahrtrichtung, so dass eventuell in dem Aufzug befindliche Personen diesen trotz Netzausfalls noch verlassen können.

Nachteilig bei der Sicherstellung einer zumindest kurzzeitigen unterbrechungsfreien Stromversorgung ist vor allem der Geräte- bzw. konstruktive, aber auch der regelungstechnische Aufwand, die beide Zusatzkosten bedingen.

*Die* US 2010/192788 A1 *offenbart ein Motorantriebssystem, mit einem mit dem Wechselstrom-Versorgungsnetz verbunden, als Leistungszufuhrwandler bezeichneten Gleichrichter, einem Gleichstromzwischenkreis und einem als Inverter bezeichneten Wechselrichter, an welchem ein Motor anzuschließen ist. Ferner ist am Gleichstromzwischenkreis ein Speicher angeschlossen, welcher Energie aufnehmen und abgeben kann.*

*Erreicht oder überschreitet die Zwischenkreisspannung $V_d$ einen Wert Vm, wird der Leistungszufuhrwandler zum Betrieb des Motors gestartet bzw. zugeschaltet, unterschreitet die Zwischenkreisspannung einen Wert Vm, wird der Leistungszufuhrwandler gestoppt. Überschreitet die Spannung im Zwischenkreis eine oberhalb der für den vorgenannten Betrieb relevante Betriebsspannung liegenden Spannungswert $U_v$ ($U_v > U_m$) so wird eine "Regeneration" gestartet, bei der Energie ins Wechselstromversorgungsnetz zurückgespeist wird, bis die Zwischenkreisspannung den Wert $U_v$ unterschreitet.*

*Die Spannung des Speichers folgt unmittelbar der des Zwischenkreises und unterstützt letztere und damit die Versorgung eines durch den Zwischenkreis gespeisten Antriebs, wenn letztere unter die Spannung des Speichers fällt.*

*Eine Steuerung der Aktivität des Zwischenspeichers über Spannungsschwellen ist nicht vorgesehen und auch ein Aufladen des Speichers unterhalb der genannten Sollwerte im Motorbetrieb unter diesen möglich, wenn die Spannung des Speichers unter der des Zwischenkreises liegt, da der Speicher unmittelbar am Zwischenkreis angeschlossen ist.*

*Das bekannte Verfahren stellt insbesondere nur auf die Spannungsverhältnisse im Gleichstromzwischenkreis ab, ohne die Verhältnisse am Speicher selbst zu berücksichtigen. Dieser kann daher unnötig in niedrige Spannungsbereiche geraten.*

*Die* CN 102 195 284 A *zeigt Wechselrichter mit jeweils einem Gleichspannungszwischenkreis, denen jeweils ein Speicher zugeordnet ist. Die Druckschrift befasst sich lediglich mit einem Systemausfall, wie einem Kurzschluss in der Wechselstromspannungsversorgung, nicht aber mit der Spannungsversorgung von Motoren aus dem Zwischenspeicher im Regelbetrieb. Es ist ein Managementsystem lediglich zum Zu- oder Abschalten der Antriebe zum Zwischenkreis vorgesehen. Der Speicher ist unmittelbar lediglich über feste DC/DC-Wandler mit den Zwischenkreisen verbunden. Demgemäß folgen auch hier die (Abgabe-)Spannungen der Speicher dem der Zwischenkreise und ein Speicher speist den jeweiligen Motor, wenn dieser mehr Leistung benötigt, unabhängig von der Adäquatheit der Speicherspannung.*

Der Erfindung liegt daher die Aufgabe zugrunde, ein Verfahren und eine Vorrichtung der eingangs genannten Art dahingehend weiterzubilden, dass *unter Berücksichtigung der Spannungsverhältnisse am Zwischenspeicher* zumindest in vielen Fällen auf einen separaten Kurzzeit-unterbrechungsfreien Stromversorger bzw. einen dynamischen Energieversorger verzichtet werden kann.

Erfindungsgemäß wird die genannte Aufgabe *mit* einem Verfahren der eingangs genannten Art gelöst, *das die kennzeichnenden Merkmale des Anspruchs 1 aufweist.* Zur Lösung der genannten Aufgabe sieht die Erfindung *weiterhin eine* gattungsgemäßen Vorrichtung *mit den kennzeichnenden Merkmalen des Anspruchs 10* vor.

Die Erfindung ermöglicht es auf eine separate Kurzzeit-USV bzw. DEV zu verzichten, indem der dynamische Energiespeicher (DES) in Abweichung von seiner üblichen Steuerung im Regelbetrieb bei Spannungsab- oder -ausfall des externen Netzes unter die für den Regelbetrieb vorgegebenen Spannungswert entladen wird, um einen Spannungsabfall des externen Netzes zu überbrücken bzw. bei Ausfall die Last bzw. den Motor geordnet und gesteuert in eine vorgegebene Position zu verfahren. Die erfindungsgemäße Vorrichtung ist in der entsprechenden Weise ausgestaltet, dass sie über den Einsatz als dynamischer Energiespeicher selbst auch als dynamische Energieversorgung bei Netzab- oder -ausfall fungiert.

Die endliche Referenzspannung ist größer als Null und hat damit einen positiven Wert. Durch die Erfindung wird ein einheitliches Verfahren geschaffen, mit dem sowohl das Energiemanagement eines elektrischen Verbrauchers im Regelbetrieb als auch Unregelmäßigkeiten im elektrischen Versorgungsnetz gehandhabt werden können und das in einem einzigen separaten Gerät - der erfindungsgemäßen Vorrichtung - implementiert werden kann, das als Zusatzteil lediglich über Anschlüsse an einem Gleichstromzwischenkreis zur Ausführung seiner Funktion angeschlossen werden kann.

Durch die Erfindung wird in an sich üblicher Weise im Regelbetrieb ein Teil der Speicherkapazität eines elektrischen Zwischenspeichers benutzt, um Energie aufzunehmen oder zu speichern (generatorischer Betrieb) oder aber abzugeben und in den Zwischenkreis einzuspeisen (motorischer Betrieb). Im Ausnahmefall, d.h. bei Netzspannungsab- bzw. -ausfall und somit unterschreitender Referenzspannung $U_{zrDEV}$ des Zwischenkreises, wird die restliche Kondensator-Ladung, die mindestens dem Level von $U_{cmaxDEV}$ entspricht, zur Stützung des Motors freigegeben. Erfindungsgemäß wird sichergestellt, dass der Motor/die Last auch bei Netzab- oder -ausfall zunächst weiterläuft. Hierdurch können viele kurzzeitige Spannungsabfälle bzw. Stromausfälle überbrückt bzw. durchgefahren werden.

In bevorzugter Ausgestaltung der Erfindung ist vorgesehen, dass der Zwischenspeicher aus dem Zwischenkreis geladen wird, wenn sowohl die Speicherspannung $U_c$ eine Regelversorgungsspannung $U_{cmaxDEV}$ des Zwischenspeichers unterschreitet als auch die Zwischenkreisspannung $U_z$ oberhalb der Referenzspannung $U_{zrDEV}$ liegt.

*Eine weitere bevorzugte Ausgestaltung sieht vor, dass der Zwischenspeicher aus dem Zwischenkreis geladen wird, wenn sowohl die Zwischenkreisspannung $U_z$ oberhalb der Referenzspannung $U_{zrDEV}$ liegt als auch die Speicherspannung $U_c$ unterhalb einer Regelversorgungsspannung $U_{cmaxDEV}$ des Zwischenspeichers liegt oder aber sowohl die Zwischenkreisspannung $U_z$ oberhalb der Regelspannung $U_{zrDES}$ des Zwischenkreises liegt und die Speicherspannung $U_c$ unterhalb einer Maximalspeicherspannung $U_{cmaxDES}$ liegt.*

Erfindungsgemäß kann vorgesehen sein, dass der Zwischenkreis durch Energieabgabe aus dem Zwischenspeicher unterstützt wird, wenn sowohl die Zwischenkreisspannung $U_z$ die Regelspannung $U_{zrDES}$ unterschreitet als auch die Speicherspannung $U_c$ oberhalb der Minimalspeicherspannung $U_{cminDES}$ liegt.

Auch kann die Erfindung in Weiterentwicklung vorsehen, dass die Minimalspeicherspannung $U_{cminDES}$ größer als die Regelversorgungsspannung $U_{cnmaxDEV}$ ist oder dass die Minimalspeicherspannung $U_{cminDES}$ gleich der Regelspannung $U_{cmaxDEV}$ ist und/oder dass im motorischen Betrieb des Motors, insbesondere in einer Anfahr- und/oder Beschleunigungsphase, Energie aus dem Zwischenspeicher zur Unterstützung des Betriebs in den Zwischenkreis bis zum Erreichen einer einstellbaren ersten Zwischenspeicherminimalspannung $U_{cminDES}$ am Zwischenspeicher abgegeben wird.

Vorrichtungsmäßig ist dabei vorgesehen, dass die Steuereinrichtung jeweils zur Durchführung der vorgenannten Verfahrensschritte ausgebildet ist.

Darüber hinaus ist es möglich, dass der Motor bei Unterschreiten des Spannungswerts $U_{zrDEV}$ des Zwischenkreises kontrolliert in den Stillstand gefahren wird. Hierzu sieht die Erfindung in bevorzugter Ausgestaltung vor, dass der Motor kontrolliert in den Stillstand gefahren wird, wenn die Zwischenkreisspannung $U_z$ die Referenzspannung $U_{zrDEV}$ über eine vorgegebene Zeit $\Delta t$ und/oder um einen vorgegebenen Differenzwert $\Delta U_{zr}$ oder eine positive Funktion $f(\Delta t, \Delta U_{zr})$ von $\Delta t$ und $\Delta U_{zr}$ unterschreitet, wobei gegebenenfalls die Steuereinrichtung der Vorrichtung entsprechend ausgebildet ist. Dabei kann weiterhin vorgesehen sein, dass bei Spannungsabfall der Netzspannung der Zwischenspeicher vollständig entladen wird bzw. dass die Vorrichtung derart ausgestaltet ist, dass im Falle eines Spannungsabfalls im Zwischenkreis bzw. des elektrischen Versorgungsnetzes der Zwischenspeicher vollständig entladbar ist.

Insbesondere kann vorgesehen sein, dass die Energieaufnahme und -abgabe des Zwischenspeichers jeweils durch ein Steuersignal gesteuert wird, das aufgrund des Vergleichs gewonnen wird.

Gemäß alternativer Ausbildungen kann vorgesehen sein, dass signifikante Zwischenkreisspannungswerte, wie Regelspannung $U_{zrDES}$ und Referenzspannung $U_{zrDEV}$ fest vorgegeben werden oder dass signifikante Zwischenkreisspannungswerte, wie Regelspannung $U_{zrDES}$ und Referenzspannung $U_{zrDEV}$ dynamisch ermittelt und angepasst werden. Während grundsätzlich auch andere Energiespeichersysteme möglich sind, ist vorzugsweise vorgesehen, dass die Energie in einem oder mehreren Kondensatoren zwischengespeichert wird. Demgemäß weist der Zwischenspeicher ein oder mehrere Kondensatoren, vorzugsweise Elektrolyt-Kondensatoren auf.

Eine dynamische Ermittlung des Zwischenkreisspannungsreferenzlevels erfolgt im DES-Modus. Der Regelspannungswert $U_{zrDES}$ ist entweder fest eingestellt oder wird durch Auswertung der Chopperschwelle ermittelt. Der Referenzspannungswert $U_{zrDEV}$ wird vorzugsweise als fest eingestellter Wert verwendet. Die Kondensatorspannung ist kleiner als die reguläre Zwischenkreisspannung. Dies ist im Normalbetrieb gewährleistet.

Die erfindungsgemäße Vorrichtung ist vorzugsweise zur Durchführung der vorstehend genannten Verfahrensschritte ausgebildet.

Während das insoweit beschriebene erfindungsgemäße Verfahren und die Vorrichtung insbesondere mit vorgegebener oder in geeigneter Weise gesteuerten Spannungsgrenzen $U_{cminDES}$ (Minimalspeicherspannung) oder $U_{cmaxDES}$ (Maximalspeicherspannung) für den Regelbetrieb des dynamischen Energiespeichers arbeiten kann, ist in bevorzugter Weise eine adaptive Anpassung gemäß der Patentanmeldung DE 10 2011 121 154.7 vorgesehen, wie sie im Folgenden vorsorglich beschrieben wird.

Die Energieaufnahme eines Energiespeichers steigt quadratisch mit der Spannung desselben. Das maximale Speichervermögen wird bei voller Aufladung des Speichers und der Spannung Null bis zur regulären höchst zulässigen Spannung oder maximalen Speicherspannung erreicht, die so ausgelegt ist, dass sie ohne Zerstörung des Speichers kurzzeitig überschritten werden darf, wobei allerdings eine absolute Speichermaximalspannung, bei der die Gefahr einer Beschädigung oder Zerstörung gegeben ist, auf keinen Fall erreicht werden darf.

Allerdings kann ein solches maximales Speichervermögen nicht voll ausgenutzt werden, da eine gewisse Anfangsspannung und damit eine Anfangsladung erforderlich ist. Die Anfangsspannung bestimmt nämlich in Verbindung mit dem Maximalwert des Stromes die maximal mögliche Anfangsleistung des Bremsvorganges, wobei der Strom durch die verwendeten elektrischen und elektronischen Bauteile konstruktiv begrenzt ist. Aus diesem Grunde sieht die EP 2 372 892 A1 schon vor, dass der Energiespeicher auf 25 bis 50 % seiner regulären Maximalspannung vorgeladen und nicht unter einem solchen fest vorgegebenen Wert entladen wird. Dieser kann nach der Druckschrift für jedes Wechselrichter-Motor-System durch dieses fest vorgegeben sein.

Es kann keine Optimierung des Betriebs des Energiespeichers und damit des angeschlossenen Motors in energetischer Hinsicht erreicht werden, da eine solche vom Arbeitsverhalten und insbesondere dem Bremsverhalten, das sich auch bei einem Wechselrichter-Motor-System im Betrieb verändern kann, beeinflusst wird.

Darüber hinaus ist auch die Aufnahme von Bremsenergie eines Antriebs bei gegebener Leistung durch einen Energiespeicher im unteren Spannungsbereich mit höheren Verlusten verbunden als in einem höheren Spannungsbereich. Dies ist bedingt durch den höheren Ladestrom bei kleiner Spannung und insbesondere auch bei Kondensatoren, die als Zwischenenergiespeicher zumindest in der Regel eingesetzt werden, durch deren spezifisches Verhalten. Auch unter diesem Gesichtspunkt des Wirkungsgrades ist es vorteilhaft, die Energiespeicherung und die Rückspeisung und damit auch den Einsatz der Energieaufnahme beim Speichern auf einem möglichst hohen Spannungsniveau stattfinden zu lassen. Dies gilt insbesondere bei einer schnellen Folge von Bremszyklen. Insofern stehen auch Speichervermögen und Wirkungsgrad konträr zueinander, womit Aufnahmeleistung und Wirkungsgrad gleichsinnig verlaufen, allerdings nicht parallel; während die maximale linear mit der Anfangsspannung ansteigt, zeigt der Wirkungsgrad ein nicht lineares, degressives Verhalten.

Um unter Beachtung der konstruktiven Randbedingungen, insbesondere des eingesetzten Energiespeichers, eine selbsttätige optimale Anpassung des Speicherbereichs, in dem die Speicherung erfolgt, zu erreichen, ist ein Verfahren zum Optimieren des Betriebs eines Energiespeichers, insbesondere zum Optimieren des Zwischenspeichers elektrischer Energie eines an einem Wechselrichter betriebenen Elektromotors in der Bremsphase vorgesehen, bei dem die während einer Bremsphase erreichte Spitzenspannung $U_{cs}$ am Energiespeicher bestimmt und festgehalten wird, dass die Spitzenspannung $U_{cs}$ mit der regulären zulässigen Maximalspeicherspannung des Energiespeichers $U_{cmaxDES}$ verglichen wird, und dass die Minimalspeicherspannung des Energiespeichers $U_{cminDES}$, auf die dieser in seiner folgenden Entladephase entladen werden darf und ab der das Laden in einer folgenden Bremsphase des Elektromotors erfolgt, erhöht wird, wenn die Spitzenspannung am Energiespeicher $U_{cs}$ gleich oder kleiner als die reguläre zulässige Maximalspeicherspannung des Energiespeichers $U_{cmaxDES}$ ist.

Soweit nicht anders gesagt, beziehen sich alle Angaben zu Spannungen auf am Energiespeicher gegebene und gemessene Spannungen. Der Energiespeicher kann bevorzugt ein Kondensator sein.

Liegt die während einer Bremsphase gemessene Spitzenspannung $U_{cs}$ am Energiespeicher unterhalb einer vorgegebenen regulären Maximalspeicherspannung $U_{cmaxDES}$ des Energiespeichers, so wird in der beschriebenen Weise die Minimalspeicherspannung $U_{cminDES}$ des Energiespeichers oder seine Anfangsladespannung angehoben; die Minimalspannung ist die - dynamisch veränderliche - Spannung, die bei einer nach einer generatorischen oder Bremsphase des Motors folgenden motorischen oder Rückspeisephase nicht unterschritten wird und die also unter den genannten Bedingungen in der beschriebenen Weise gegenüber ihrem Ausgangswert erhöht wurde. Dies bedingt, dass beim nächsten Bremsvorgang sowohl eine höhere Anfangsleistung durch den Zwischenenergiespeicher aufgenommen werden kann als auch der Wirkungsgrad der Speicherung verbessert wird. Dies kann so lange fortgesetzt werden, solange der während einer Bremsphase gemessene Spitzenspannungswert unterhalb des regulären zulässigen Maximalspeicherspannungswerts $U_{cmaxDES}$ des Energiespeichers liegt. Die reguläre zulässige Maximalspeicherspannung $U_{cmaxDES}$ ist eine in Relation zur Nennspannung des Energiespeichers in geeigneter oder gewünschter Weise festgesetzter Spannungswert. Die Nennspannung ist ein beispielsweise für einen bestimmten Kondensator als Energiespeicher vorgegebener Wert, der allerdings kurzzeitig - auch erheblich - überschritten werden kann - bis unterhalb einer absoluten Maximalspeicherspannung $U_{cmaxabs}$, bei deren Erreichen eine Zerstörung des Kondensators droht. Die zulässige Maximalspeicherspannung $U_{cmaxDES}$ wird im Rahmen der Erfindung vorzugsweise auf den Wert der Nennspannung gesetzt, kann aber auf einen Wert unterhalb derselben gesetzt werden, beispielsweise 10 Volt unterhalb, sollte aber vorzugsweise nicht die Nennspannung überschreiten.

Wird während der Abfolge mehrerer Bremsungen aufgrund unterschiedlicher Bremsmuster die regulär zulässige Maximalspeicherspannung $U_{cmaxDES}$ überschritten, die, wie gesagt, derart bestimmt bzw. ausgelegt ist, dass sie kurzzeitig ohne Beschädigung oder Zerstörung überschritten werden darf, so ist gemäß einer bevorzugten Ausgestaltung des erfindungsgemäßen Verfahrens vorgesehen, dass die Minimalspeicherspannung des Energiespeichers $U_{cminDES}$ vermindert wird, wenn die Spitzenspannung am Energiespeicher $U_{cs}$ während einer Bremsphase größer als die reguläre Maximalspeicherspannung $U_{cmaxDES}$ ist.

Sowohl bei der dynamischen Erhöhung der Absolut-Energiespeicher-Spannung oder Anfangsladespannung bei einem Bremsvorgang als auch der Reduzierung dient das Maß des Unterschreitens bzw. Überschreitens der regulär zulässigen Maximalspannung des Energiespeichers als Maß zur Bestimmung des positiven bzw. negativen Korrekturwerts für die untere Ladespannungsgrenze.

Die Erhöhung der unteren Ladespannungsgrenze oder der dynamisch veränderlichen minimalen Energiespeicher-Spannung geschieht in kleinen Schritten und zwar gemäß einer bevorzugten Ausgestaltung des erfindungsgemäßen Verfahrens derart, dass die Minimalspeicherspannung am Energiespeicher $U_{cminDES}$ um einen Faktor a = 0,05 bis 0,2 der Differenz der regulären maximalen Kondensatorspannung und der während der Bremsphase gemessenen Spitzenspannung am Kondensator erhöht wird:

$$\texttt{U}_{\texttt{cminDES}} \texttt{ = U}_{\texttt{cminDES}} \texttt{ + (U}_{\texttt{cmaxDES}} \texttt{ - U}_{\texttt{cs}} \texttt{) } \cdot \texttt{ a, wobei}$$

$$\texttt{0,01} \leq \texttt{a} \leq \texttt{0,2}$$

insbesondere um einen Faktor a = 1/32 der genannten Differenz erhöht wird:

$$\texttt{U}_{\texttt{cminDES}} \texttt{ = U}_{\texttt{cminDES}} \texttt{ + (U}_{\texttt{cmaxDES}} \texttt{ - U}_{\texttt{cs}} \texttt{) / 32,}$$

wenn die Spitzenspannung am Energiespeicher $U_{cs}$ gleich oder kleiner als die reguläre zulässige Maximalspeicherspannung des Energiespeichers $U_{cmaxDES}$ ist. Dieses Vorgehen wird auch einer Folge von unregelmäßigen stärkeren Bremsungen gerecht, ohne dass zu oft eine Absenkung der unteren Ladespannungsgrenze gemäß dem vorstehenden Absatz notwendig ist.

Demgegenüber erfolgt die gegebenenfalls notwendige Absenkung der Minimalspeicherspannung $U_{cminDES}$ oder der unteren Ladegrenze, vorzugsweise mit höherer Gewichtung, also in größeren Schritten und insbesondere dadurch, dass die Minimalspeicherspannung des Energiespeichers $U_{cminDES}$ um einen Faktor b = 1 bis 3 der Differenz zwischen während der Bremsphase gemessener Spitzenspannung am Energiespeicher $U_{cs}$ und regulärer Maximalspeicherspannung des Energiespeichers $U_{cmaxDES}$ vermindert wird:

$$U_{cminDES} = U_{cminDES} - (U_{cs} - U_{cmaxDES}) \cdot b, \text{ wobei}$$

$$1 \leq b \leq 3,$$

insbesondere um einen Faktor b = 2 der genannten Differenz vermindert wird:

$$U_{cminDES} = U_{cminDES} - (U_{cs} - U_{cmaxDES}) \cdot 2,$$

wenn die Spitzenspannung am Energiespeicher $U_{cs}$ während einer Bremsphase größer als die reguläre Maximalspeicherspannung $U_{cmaxDES}$ des Energiespeichers ist.

Hierdurch wird erreicht, dass bei Überschreiten der regulär zulässigen Maximalspeicherspannung $U_{cmaxDES}$ die Anfangsspannung schnell wieder auf einen Wert zurückgeführt wird, der erwarten lässt, dass die reguläre zulässige Maximalspeicherspannung $U_{cmaxDES}$ bei folgenden Bremsphasen nicht mehr überschritten wird.

In bevorzugter Ausgestaltung kann dabei weiterhin vorgesehen sein, dass das Verhältnis der Veränderungsfaktoren a zu b bei Erhöhung bzw. Verminderung der dynamisch veränderlichen Minimalspeicherspannung $U_{cminDES}$ am Energiespeicher zwischen 1:10 und 1:160, vorzugsweise bei 1:64 liegt, also $1{:}10 \geq a{:}b \geq 1{:}100$, vorzugsweise a:b = 1:64.

Gemäß einer bevorzugten Ausbildung ist vorgesehen, dass während einer Bremsphase ein gesetzter und gespeicherter Spitzenspannungswert $U_{cs}$ auf den höchsten während der Bremsphase gemessenen Wert der Spannung $U_c$ am Energiespeicher gesetzt wird.

Weitere bevorzugte Ausgestaltungen der adaptiven Anpassung beinhalten, dass ein Bremsvorgang erst angenommen wird und damit die vorstehende Anpassung des Spannungsbereichs, in dem das Laden des Energiespeichers während des Bremsvorgangs erfolgt, erst angenommen wird, wenn die - während einer Bremsphase - am Energiespeicher gemessene Spannung die gesetzte Minimalspeicherspannung $U_{cminDES}$ oder Anfangsladespannung des Energiespeichers um einen erheblichen Wert überschreitet, und dass ein Ende des Bremsvorgangs angenommen wird, wenn die aktuell gemessene Spannung zwar auch oberhalb der gesetzten Minimal- oder Anfangsladespannung, aber unterhalb eines niedrigeren Werts als vorstehend angegeben liegt.

Gemäß einer bevorzugten Ausgestaltung kann dies dadurch erfolgen, dass Eintritt und/oder Ende einer Bremsphase des Motors am Wechselrichter bestimmt und festgehalten werden, insbesondere der Eintritt der Bremsphase bzw. das Ende der Bremsphase jeweils durch Setzen eines Merkers.

Die Bremsphase wird insbesondere derart bestimmt, dass der Eintritt der Bremsphase bei Überschreiten der geltenden dynamisch veränderlichen Minimalspeicherspannung am Energiespeicher $U_{cminDES}$ um einen Wert $U_a$ zwischen 30 und 90 Volt, vorzugsweise 40 bis 70 Volt, und/oder das Ende der Bremsphase bei Unterschreiten der gesetzten dynamisch veränderlichen minimalen Spannung am Energiespeicher $U_{cminDES}$ zuzüglich eines Werts $U_b$ von höchstens 10 bis 30 Volt, vorzugsweise 20 Volt durch die aktuell anliegende Spannung $U_c$ detektiert wird, wobei insbesondere der Grenzwert $U_a$ des Überschreitens der gesetzten dynamisch veränderlichen Minimalspeicherspannung $U_{cminDES}$ des Energiespeichers zum Bestimmen des Eintritts der Bremsphase größer, insbesondere wesentlich größer, als der Grenzwert $U_b$ über der gesetzten dynamisch veränderlichen Minimalspeicherspannung am Energiespeicher $U_{cminDES}$ gemäß $U_a \gg U_b$, insbesondere $U_a > U_b + 30$ Volt ist. Gemäß einer weiteren bevorzugten Ausgestaltung ist vorgesehen, dass das Unterschreiten einer vorgegebenen absoluten Minimalspannung oder Absolut-Minimalspannung des Energiespeichers $U_{cmin}EE$ durch die während der Bremsphase gesetzte dynamisch veränderliche Minimalspeicherspannung des Energiespeichers $U_{cminDES}$ überwacht wird, woraufhin die dynamisch veränderliche Minimalspeicherspannung des Energiespeichers $U_{cminDES}$ auf den absoluten Minimalwert $U_{cmin}EE$ gesetzt wird.

Darüber hinaus sehen bevorzugte Ausgestaltungen vor, dass am Ende einer Bremsphase der gesetzte Spannungsspitzenwert $U_{cs}$ für die nächste Bremsphase auf den Wert der dynamisch veränderlichen Minimalspeicherspannung $U_{cminDES}$ des Energiespeichers gesetzt wird und insbesondere dass zum Ende einer Bremsphase der Wert einer dynamisch veränderlichen Maximalspannung $U_{cabs}$ auf einen oberhalb der regulären Maximalspeicherspannung $U_{cmaxDES}$ liegenden Wert gesetzt wird, insbesondere auf einen um einen Erhöhungswert $U_e$ oberhalb von Maximalspeicherspannung $U_{cmaxDES}$ liegenden Wert.

Dabei kann vorgesehen sein, dass der Erhöhungswert ein Bruchteil der Differenz zwischen der gesetzten Minimalspeicherspannung des Energiespeichers $U_{cminDES}$ und dessen Absolut-Minimalspannung $U_{cmin}EE$ ist vorzugsweise ein Bruchteil c zwischen 1 und 3 dieser Differenz:

$$U_{cabs} = U_{cmaxDES} + U_e = U_{cmaxDES} + (U_{cminDES} - U_{cmin}EE) \; / \; c,$$

$$\text{wobei } 1 \leq c \leq 3,$$

insbesondere c die Hälfte dieser Differenz ist:

$$U_{cabs} = U_{cmaxDES} + U_e = U_{cmaxDES} + (U_{cminDES} - U_{cmin}EE) / 2$$

Wie schon eingangs gesagt, wird beim Gerätestart mit einer vorgegebenen, gegebenenfalls systemspezifischen absoluten unteren Ladespannung oder Absolut-Minimalspannung $U_{cmin}EE$ des Energiespeichers gestartet. Wenn dann insbesondere in der Anfangsphase, bei der die jeweilige Anfangsladespannung noch nicht in der oben beschriebenen Weise dynamisch angepasst wurde, Bremsvorgänge mit Leistungsspitzen auftreten, die nicht durch den Energiespeicher aufgenommen werden können, weil dessen Anfangsspannung - noch - zu klein ist, so übernimmt in bevorzugter Ausgestaltung ein Ballastwiderstand den überschüssigen Anteil der Leistung, so dass kein unzulässiger Spannungsanstieg der Eingangsspannung oder Zwischenkreisspannung des Umrichters entsteht.

Gleiches geschieht, wenn im weiteren Verlauf aufgrund des dynamischen Ansteigens der Minimalspannung $U_{cminDES}$ des Energiespeichers oder unteren Ladespannungsgrenze aufgrund starker Bremsungen die Energieaufnahme des Energiespeichers nicht mehr ausreichen kann, so dass auch dann der Ballastwiderstand die überschüssige Energie übernimmt. Dies ist für das System kein Nachteil, weil der Fall nur in größeren Zeitabständen auftritt und in der Zwischenzeit alle anderen Bremsungen mit optimiertem Wirkungsgrad und erhöhter Anfangsleistungsaufnahme stattfinden können.

Das Zu- und Abschalten des Energiespeichers zum bzw. vom Zwischen- oder Gleichstromkreis des Umrichters erfolgt bevorzugt durch einen DC-DC-Steller.

Das beschriebene adaptive Verfahren bietet insgesamt eine optimale Anpassung der Betriebsbedingungen des Energiespeichers an die durch effektive Speicherkapazität, Anfangsleistung und Wirkungsgrad gegebenen Anforderungen. Dabei ist die vorzugsweise vorgesehene langsame Anpassung der Anfangsladespannung oder dynamisch veränderlichen Minimalspeicherspannung $U_{cminDES}$ des Energiespeichers technisch unkritisch. Der Nutzen durch die bessere Effizienz im oberen Spannungsbereich bleibt nämlich bestehen, weil der zeitliche Anteil des Anpassungsvorganges im Verhältnis zur gesamten Betriebszeit der Last (Motor) vernachlässigbar ist. Mit der langsameren Anpassung der unteren Grenze zu höheren Werten hin wird aber, wie gesagt, Anwendungen mit unterschiedlich energiereichen Bremsvorgängen Rechnung getragen. Demgegenüber ist, wie ebenfalls schon ausgeführt, die Anpassung der unteren Spannungsgrenze oder Minimalspeicherspannung $U_{cminDES}$ in zu niedrigeren Werten hin stärker gewichtet, um bei einem höheren Anteil stärkerer Bremsungen mit größerer Energieabgabe wieder genügend Speichervermögen zur Verfügung zu halten und damit weniger häufig die Unterstützung eines Ballastwiderstandes zu benötigen.

Weitere Vorteile und Merkmale der Erfindung ergeben sich aus den Ansprüchen und der nachfolgenden Beschreibung, aus der Ausführungsbeispiele der Erfindung unter Bezugnahme auf die Zeichnungen im Einzelnen erläutert sind. Dabei zeigt:

Fig. 1         eine schematische Darstellung eines Gleichspannungs-Zwischenkreises eines Wechselrichters eines Elektromotors;

Fig. 1a      eine schematische Darstellung einer erfindungsgemäßen Vorrichtung mit einem dynamischen Energiespeicher zum Anschluss an einen Gleichspannungszwischenkreis, insbesondere der Fig. 1, zur Durchführung des erfindungsgemäßen Verfahrens;

Fig. 2         eine erste Ausgestaltung der Schaltung der erfindungsgemäßen Vorrichtung zur Nutzung des Zwischenspeichers sowohl als dynamischer Energiespeicher als auch dynamische Energieversorgung;

Fig. 3         eine schematische Darstellung ähnlich der der Figur 2 mit einer übergeordneten Regelungseinheit zur Steuerung der Lade- und Entladvorgänge;

Fig. 4         eine weitere schematische Darstellung entsprechend der Figuren 2 und 3, wobei die übergeordnete Regeleinheit gegenüber den bei den Ausgestaltungen der Figuren 2 und 3 fest vorgegebenen Minimal- und Maximal-Spannungsschwellwerten am Kondensator diese dynamisch, insbesondere (entsprechend der DE 10 2011 121 154.7) regeln kann;

Fig. 5         den typischen Spannungsverlauf in einem Zwischenkreis einer erfindungsgemäßen Vorrichtung im Regelbetrieb;

Fig. 5a      die erfindungsgemäß gesteuerte Spannung am Zwischenspeicher bei Verlauf der Zwischenkreisspannung entsprechend der Figur 5;

Fig. 6      Diagramm zum Verlauf der Zwischenkreisspannung und der Aktivitäten des Zwischenspeichers (Laden, Entladen) in Abhängigkeit von der Größe der Zwischenkreisspannung und der Zwischenspeicherspannung;

Fig. 7      eine konkrete Ausgestaltung eines Energiespeichers zur Durchführung einer adaptiven Anpassung;

Fig. 8      ein Diagramm mit der Darstellung der Speicherkapazität $E_c$ und der Anfangsleistung $P_{max}$ eines Kondensators in Abhängigkeit von der Ausgangskompensatorspannung bzw. der minimalen Kondensatorspannung eines Kondensators beim Beginn des Ladens;

Fig. 9      ein Diagramm wiederum der Speicherkapazität $E_c$ sowie des Wirkungsgrads eines Kondensators in Abhängigkeit von der Ausgangsspannung bzw. Minimalspannung am Anfang eines Ladevorgangs;

Fig. 10      Anfangsleistung und Wirkungsgrad in Abhängigkeit der Anfangsspannung bzw. Minimalspannung bei Beginn eines Bremsvorganges;

Fig. 11      eine Darstellung des Verlaufs der Spannung an einem Speicherkondensator während des Bremsvorgangs eines Elektromotors mit Angabe verschiedener charakteristischer Spannungen; und

Fig. 12      ein Ablaufdiagramm zum erfindungsgemäßen Verfahren.

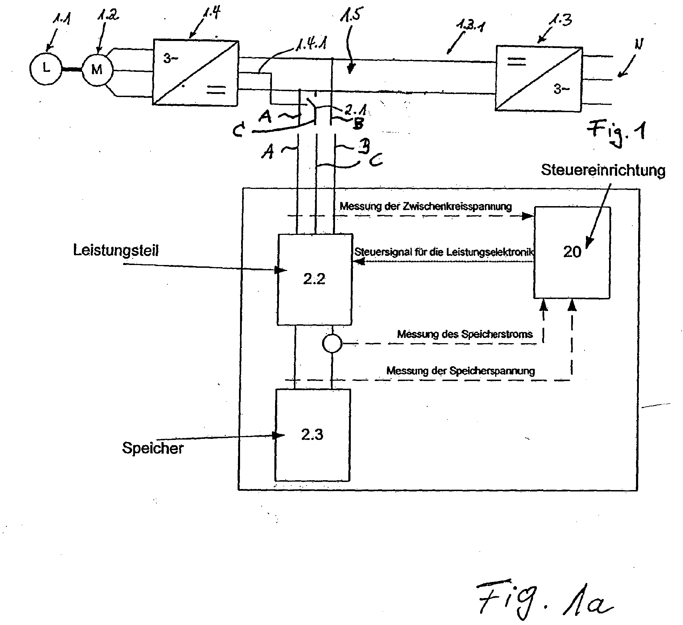

Gemäß der Figur 1 wird ein eine Last 1.1 bewegender Elektromotor 1.2 aus einem elektrischen Versorgungsnetzwerk N über einen Umrichter 1 angetrieben. Dieser weist einen netzseitigen Gleichrichter 1.3 und einen motorseitigen Wechselrichter 1.4 auf sowie zwischen diesen einen Gleichstromzweig oder (Gleichspannungs-)Zwischenkreis 1.5. Der Gleichrichter 1.3 richtet die Wechsel- oder Drehspannung des Versorgungsnetzes in eine Gleichspannung (im Gleichstromzweig oder Zwischenkreis 1.5) und der Wechselrichter 1.4 diese in eine für den Motor geeignete Wechselspannung um. An dem Zwischenkreis 1.5 zwischen Gleichrichter 1.3 und Wechselrichter 1.4 ist ein dynamischer Energiespeicher 2 über zwei Leistungsleitungen A, B angeschlossen, der darüber hinaus über einen Schalter/Chopper 2.1 mit einer Bremschopper-Ansteuerung 1.4.1 des Wechselrichters 1.4 verbunden sein kann (Leitung C).

Die dynamische Energiespeichereinheit 2 (Fig. 1a) weist einerseits eine Steuereinrichtung 20, insbesondere mit einem DC-DC-Steller 2.2 und andererseits einen eigentlichen Energie- oder Zwischenspeicher 2.3 auf. Dieser kann in verschiedener Weise ausgestaltet sein, es kann sich beispielsweise um einen Akkumulator, aber auch einen mechanischen Speicher handeln. Bevorzugt ist der Energie- oder Zwischenspeicher 2.3 ein Kondensatorspeicher mit ein oder mehreren Kondensatoren 13. Eine erfindungsgemäße Vorrichtung ist vorzugsweise als separate an dem Gleichspannungszwischenkreis in der beschriebenen Weise anschließbaren Einheit gemäß Fig. 1a ausgebildet, kann aber auch zusätzlich in bevorzugter Ausgestaltung die Elemente der Fig. 1 beinhalten. Die zur genaueren Ausgestaltung der dynamischen Energiespeichereinheit 2, insbesondere hinsichtlich der Leistungssteuerung des Ladens und Entladens des Energie- oder Zwischenspeichers 2.3 selbst wird ausdrücklich auf die Ausgestaltungen der EP 2 372 892 A1 sowie der DE 10 2011 121 154.7, deren Offenbarung, wie gesagt, zum Gegenstand der vorliegenden Offenbarung gemacht wird, verwiesen, während im Folgenden nur die zum Einsetzen der Vorgänge für den vorliegenden Erfindungsgegenstand wesentliche (Trigger-Logik) dargestellt und beschrieben wird.

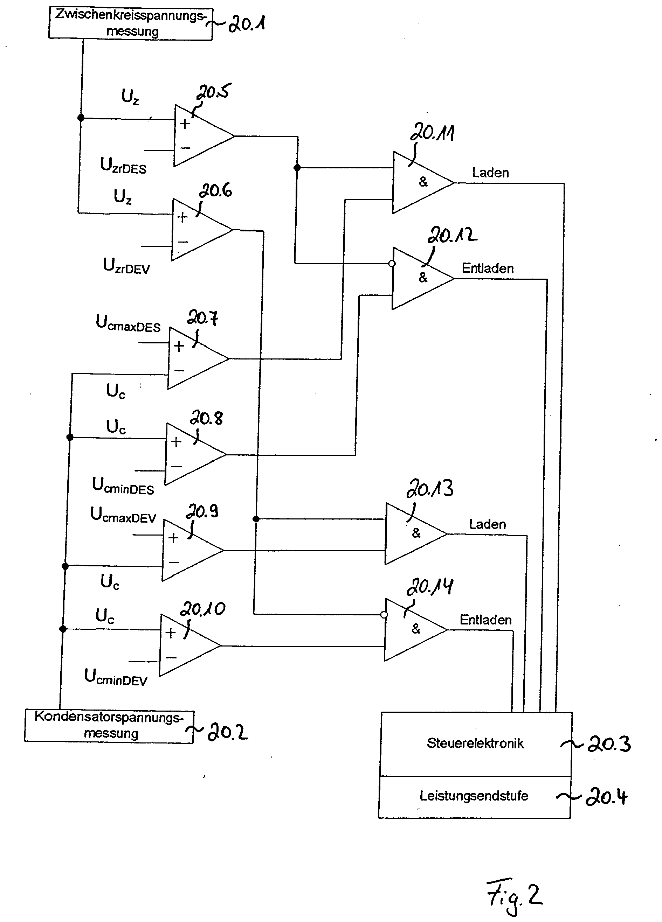

Eine schematische Darstellung der Schaltung 20 zum Einleiten der Lade- und Entladevorgänge ist in einer ersten Ausführungsform in der Fig. 2 dargestellt. Diese ist Teil der Steuerschaltung 2.2 der Fig. 1a. Sie weist einen Zwischenkreisspannungsmesser 20.1 zur Messung der Spannung des Zwischenkreises, einen Kondensatorspannungsmesser 20.2, eine Steuerelektronik 20.3 sowie eine zwischen Zwischenkreis 1.5 und Zwischenspeicher 2.3 geschaltete Leistungsendstufe 20.4 mit dem DC-DC-Steller 2.2 der Fig. 1a auf.

Weiterhin sind bei der Ausführungsform der Fig. 2 im Wesentlichen Komparatoren und logische UND-Glieder vorhanden.

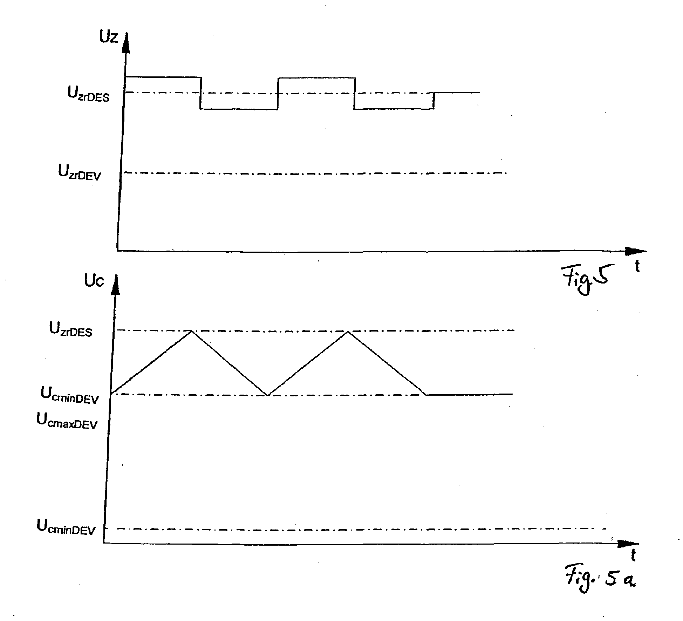

Ein erster Komparator 20.5 vergleicht die durch den Zwischenkreismesser 20.1 gemessenen Spannung $U_z$ des Zwischenkreises 1.5 mit einem für den regulären EnergiespeicherBetrieb (DES-Betrieb) charakteristische Regelspannung. $U_{zrDES}$. Ein Komparator 20.6 vergleicht die gemessene Zwischenkreisspannung $U_z$ mit einer Referenzspannung $U_{zrDEV}$ des Zwischenkreises zur Überwachung der Versorgungsspannung aus dem Versorgungsnetz, wobei der Wert von Referenzspannung $U_{zrDEV}$ unter dem Wert von der Regelspannung $U_{zrDES}$ liegt (Fig. 5).

Weiterhin sind Komparatoren 20.7 bis 20.10 vorhanden, die die am Zwischenspeicher gemessene tatsächliche Spannung $U_c$ desselben mit vorgegebenen Minimal- und Maximalspannungswerten für Energiespeicher (DES) und Energieversorgungsbetrieb (DEV) vergleichen, wie dies im Folgenden näher beschrieben wird. Am Ausgang jedes Komparators steht jeweils ein Signal zur Verfügung, das anzeigt, welche der Eingangsspannungen höher ist. Wenn die Spannung am positiven (+), nicht-invertierenden Eingang höher ist als die Spannung am negativen (-) invertierenden Eingang des Komparators, so nähert sich die Ausgangsspannung der positiven Versorgungsspannung (Versorgungsanschlüsse nicht dargestellt), bei umgekehrten Verhältnissen geht die Ausgangspannung gegen die negative Versorgungsspannung. So steht beim Komparator 20.5 dann, wenn der Mess-Spannungswert $U_z$ höher ist als die Regelspannung $U_{zrDES}$ eine positive Ausgangspannung an, im umgekehrten Falle eine negative. Das UND-Glied 20.11 vergleicht die Ausgangsspannung der Komparatoren 20.5 und 20.7, das UND-Glied 20.12 die Ausgangsspannungen der Komparatoren 20.5 und 20.8, die für den Regelbetrieb (DES-Betrieb) maßgeblichen Vergleichsergebnisse von Zwischenkreis- und Zwischenspeicher-Spannung. Demgemäß vergleicht das UND-Glied 20.13 die Ausgänge der Komparatoren 20.6 und 20.9 und das UND-Glied 20.14 die Ausgänge der Komparatoren 20.6 und 20.10.

Im Einzelnen:

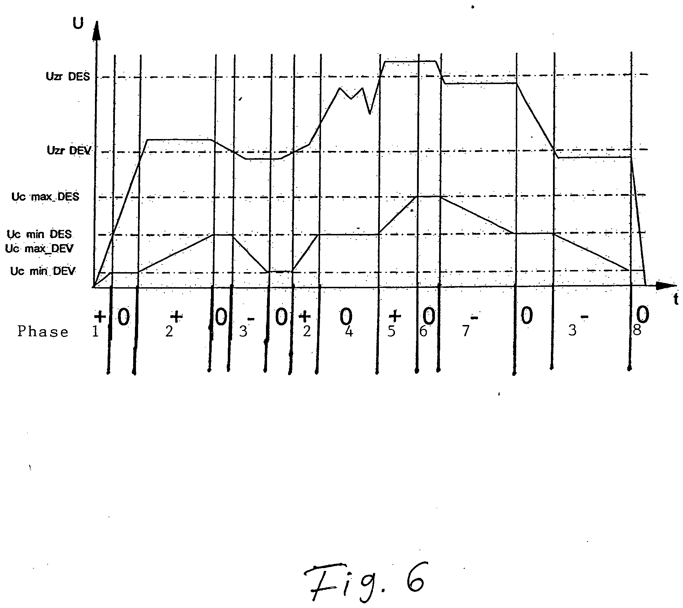

Wenn im generatorischen Betrieb die im Zwischenkreis gemessene Spannung $U_z$ größer ist als die Regelspannung $U_{zrDES}$ (Komparator 20.5) und darüber hinaus die am Zwischenspeicher gemessene Spannung $U_c$ unterhalb der zulässigen Maximalspeicherspannung des Zwischenspeichers $U_{cmaxDES}$ liegt (Komparator 20.7), so liegen am UND-Glied 20.11 zwei positive Spannungswerte an, so dass an dessen Ausgang ein - positives - Steuersignal für die Steuerelektronik 20.3 zum Laden des Zwischenspeichers 2.3 ansteht. Die Spannungsverhältnisse im Zwischenkreis für diesen Fall sind in der ersten und dritten Phase der Fig. 5 und entsprechend auch die Ladevorgänge des Zwischenspeichers 2.3 in der ersten und dritten Phase der Fig. 6 dargestellt.

Sind die Spannungsverhältnisse am Komparator 20.5 umgekehrt, so ist die UND-Bedingung des Glieds 20.11 nicht gegeben, so dass kein Laden erfolgt. Am UND-Glied 20.12 wird das Ausgangssignal des Komparators 20.5 invertiert - wie aus der Zeichnung ersichtlich ist -, es liegt also eine positive Spannung an. Liegt gleichzeitig die am Zwischenspeicher 2.3 gemessene Spannung $U_c$ über der regulären Minimalspeicherspannung $U_{cminDES}$ (Komparator 20.8), so bewirken beide am UND-Glied 20.12 anliegenden positiven Signale ein positives Ausgangssignal desselben, mit dem die Steuerelektronik 20.3 ein Entladen des Zwischenspeichers 2.3 bei Anfahr- oder Beschleunigungsbetrieb bewirkt.

Die entsprechenden Spannungsverhältnisse am Zwischenkreis 1.5 sind in der zweiten und vierten Phase der Fig. 5 und die Spannungsverhältnisses des Entladens des Zwischenspeichers in der entsprechenden zweiten und vierten Phase der Fig. 6 dargestellt.

Dies ist soweit die klassische Funktion eines dynamischen Energiespeichers 2.3 im Regelbetrieb.

Fällt zum einen die im Zwischenkreis 1.5 gemessene Spannung $U_z$ unter eine Referenzspannung $U_{zrDEV}$ für den dynamischen Energieversorgerbetrieb (DEV), so steht am Ausgang des Komparators 20.6 ein negatives Signal an, das zum UND-Glied 20.14 invertiert wird (also positiv wird); ist darüber hinaus die am Zwischenspeicher 2.3 gemessene Spannung $U_c$ größer als eine für diesen vorgegebene Minimalversorgungsspannung $U_{cminDEV}$ (die ebenfalls deutlich unter der Minimalspeicherspannung $U_{cminDES}$ des Kondensators für den Regelbetrieb liegt) - Vergleich durch Komparator 20.10 steht am Ausgang des UND-Glieds 20.14 ein positives Signal an und die Steuerelektronik bewirkt ein Entladen des Zwischenspeichers 2.3 und damit eine Unterstützung der eingefallenen Netzversorgungsspannung, so dass der Motor 1.2 bis zu einem sicheren Endzustand weiterbetrieben werden kann. Fällt die gemessene Zwischenkreisspannung $U_z$ auf einen Wert der Referenzspannung $U_{zrDEV}$, so bedingt dies eine Entladung des Kondensators von einem Wert der Regelversorgungsspannung $U_{cmaxDEV}$ (der in der Regel mit dem Wert der Minimalspeicherspannung $U_{cminDES}$ übereinstimmt) bis weitgehend zu einem vorgegebenen Minimalspannungswert der Minimalversorgungsspannung $U_{cminDEV}$, der gegebenenfalls nach Vergabe auch 0 V betragen kann.

Prinzipiell ist es möglich, die Grenzen von Minimalspeicherspannung $U_{cminDES}$ und Regelversorgungsspannung $U_{cmaxDEV}$ unabhängig voneinander einzustellen. Zum Erhalt einer Sicherheit bezüglich der verfügbaren Leistung und der verfügbaren Energie ist vorzugsweise $U_{cminDES} = U_{cmaxDEV}$. Die Wertekombinationen können dabei dynamisch angepasst werden.

In der Regel erfolgt eine Umschaltung zwischen DES-Mode und DEV-Mode abhängig von der Zwischenkreisspannung. Bei Start des Gerätes hat es sich als gut erwiesen, dieses im DES-Mode starten zu lassen. Dadurch ergibt sich eine leistungsbegrenzte Vorladung des Kondensators.

Steigt, beispielsweise nach einem lediglich kurzzeitigen Spannungseinbruch der Netz-Versorgungsspannung, die im Zwischenkreis 1.5 gemessene Spannung $U_z$ über die Referenzspannung $U_{zrDEV}$ (positiver Ausgang am Komparator 20.6) an und liegt die Speicherspannung $U_c$ unterhalb der für die dynamische Spannungsversorgung vorgesehenen notwendigen Maximalspeicherspannung $U_{cmaxDEV}$ (positiver Ausgang am Komparator 20.9), so liegen zwei positive Spannungswerte am UND-Glied 20.13, so dass dieses die Steuerelektronik 20.3 zu einem Aufladen des Zwischenspeichers 2.3 bis zum Wert der Regelversorgungsspannung $U_{cmaxDEV}$ veranlasst, während ein weiteres Aufladen im Regelbetrieb in der oben beschriebenen Weise über die Komparatoren 20.5, 20.7 und das UND-Glied 20.11 bewirkt wird.

Die Verfahrensphasen des erfindungsgemäßen Verfahrens sind in der Fig. 6 dargestellt. Dabei ergeben sich die Bedingungen und Konsequenzen hinsichtlich der Speichervorgänge aus dem Zwischenkreis 1.5 in den Zwischenspeicher 2.3 und der Rückladevorgänge aus dem Zwischenspeicher 2.3 in den Zwischenkreis 1.5 auch aus den nachfolgenden Tabellen. Ein "+" bezeichnet ein Laden des Zwischenspeichers 2.3 aus dem Zwischenkreis 1.5, ein "-" Entladen des Zwischenspeichers 2.3 und damit einen Stromfluss aus diesem in den Zwischenkreis 1.5 zur Unterstützung desselben, während "0" für eine Ruhephase steht, in der weder ein Laden noch ein Entladen erfolgt. Es gilt grundsätzlich $U_{zr}DES > U_{zr}DEV > U_{cmax}DES > U_{c^-min}DES \geq U_{cmax}DEV > U_{cmin}DEV$. Wählt man exakt $U_{cmin}DES = U_{cmax}DEV$, so vereinfacht sich die Tabelle zu

| | $U_z<U_{zr}DEV$ | $U_{zr}DES>U_z>U_{zr}DEV$ | $U_z>U_{zr}DES$ |
|---|---|---|---|
| $U_c>U_{cmax}DES$ | – | – | – |
| $U_c = U_{cmax}DES$ | – | – | 0 |
| $U_{cmax}DES>U_c>U_{cmin}DES$ | – | – | + |
| $U_{cmin}DES = U_c$ | – | 0 | + |
| $U_{cmin}DES>U_c>U_{cmin}DEV$ | – | + | + |
| $U_{cmin}DEV = U_c$ | 0 | + | + |
| $U_{cmin}DEV>U_c$ | + | + | + |

Typische Spannungswerte sind dabei: $U_{zr}DES = 760$ V, $U_{zr}DEV = 470$ V, $U_{cmax}DES = 450$ V, $U_{cmin}DES = U_{cmax}DEV = 300$ V und $U_{cmin}DEV = 30$ V.

Im Folgenden werden die einzelnen Verfahrensphasen der Fig. 6 erläutert, insbesondere soweit eine Aktivität des Zwischenspeichers - Laden oder Rückladen - bewirkt wird, während nur auf bestimmte "Ruhephasen" des Zwischenspeichers (weder Laden noch Rückladen) eingegangen wird. Die Phasen entsprechen dabei den unten in der Fig. 6 angegebenen.

Phase 1:

Diese zeigt die Inbetriebnahme der erfindungsgemäßen Vorrichtung und damit das Laden des Zwischenspeichers 2.3 aus dem Zwischenkreis 1.5 auf mindestens eine Minimalversorgungsspannung $U_{cmin}DEV$, wenn diese positiv endlich gewählt bzw. eingestellt wurde, wie vorstehend beispielhaft mit 30 V angegeben.

Phase 2:

Überschreitet die Zwischenkreisspannung $U_z$ die Referenzspannung $U_{zr}DEV$, wird der Zwischenspeicher 2.3 weiter bis zur ersten Regelversorgungsspannung $U_{cmax}DEV$ aufgeladen.

Phase 3:

Fällt die Zwischenkreisspannung $U_z$ unter die Referenzspannung $U_{zr}DEV$, erfolgt ein Rückladen von Energie aus dem Zwischenspeicher 2.3 in den Zwischenkreis 1.5 zur Unterstützung desselben, bis die Zwischenkreisspannung $U_z$ die Referenzspannung $U_{cmax}DEV$ wieder erreicht oder aber die Zwischenspeicherspannung $U_c$ auf die Minimalversorgungsspannung $U_{cmin}DEV$ abgefallen ist, die - im Betrieb - nicht unterschritten werden soll und nicht unterschritten wird.

Phase 4:

Hier hat der Zwischenkreis 1.5 eine hinreichende Zwischenkreisspannung zwischen der Referenzspannung $U_{zr}DEV$ und der Regelspannung $U_{zr}DES$ zum normalen Betrieb oder Regelbetrieb des elektrischen Verbrauchers (Elektromotors) ohne besondere Leistungsanforderungen oder -abgaben vom Verbraucher, also z.B. beim Verfahren eines Motors mit im Wesentlichen gleichbleibender Geschwindigkeit ohne größere Beschleunigungs- oder Verzögerungsvorgänge und damit ohne die Notwendigkeit von Lade- oder Entladevorgängen am Zwischenspeicher.

Phase 5:

Aufgrund einer Leistungsabgabe des elektrischen Verbrauchers, insbesondere beim Bremsen eines Antriebs, erfolgt ein Spannungsanstieg im Zwischenkreis 1.5 über die Regelspannung $U_{zr}DES$ hinaus, was zu einem weiteren Laden des Zwischenspeichers bis auf eine Maximalspeicherspeicherspannung $U_{cmax}DES$ führt - bis diese erreicht ist.

Phase 6:

Ist die Maximalspeicherspannung $U_{cmax}DES$ erreicht, wird der Zwischenspeicher 2.3 nicht weiter geladen, vielmehr muss die Energieabgabe des Verbrauchers, wie beim Bremsen eines Antriebs, in anderer - bekannter - Weise abgeführt bzw. dissipiert werden, wie eben durch Umwandlung in Wärme.

Phase 7:

Fällt die Spannung im Zwischenkreis unter die Regelspannung $U_{zr}DES$, beispielsweise aufgrund einer Leistungsanforderung des elektrischen Verbrauchers, wie durch Beschleunigung eines Antriebs, z.B. beim Anfahren, und liegt die Spannung am Zwischenspeicher 2.3 über der Minimalspeicherspannung $U_{cmin}DES$, so kann der Zwischenspeicher 2.3 den Zwischenkreis 1.5 durch Einspeisen oder Rücklagen von Energie aus dem Zwischenspeicher 2.3 in den Zwischenkreis 1.5 unterstützen, bis die Zwischenspeicherspannung $U_z$ auf die Minimalspeicherspannung $U_{cmin}DES$ abgefallen ist.

Phase 8:

Hat die Zwischenspeicherspannung $U_c$ die Minimalversorgungsspannung $U_{cmin}DEV$ erreicht, bleibt aber die Netzspannung weiter eingebrochen und stabilisiert die Zwischenkreisspannung sich nicht, so erfolgt keine weitere Unterstützung des Zwischenkreises 1.5 durch den Zwischenspeicher 2.3 und der elektrische Versorger muss - vorzugsweise geordnet - stillgesetzt werden. Hierfür können Kriterien vorgesehen werden, wie beispielsweise das Unterschreiten der Minimalversorgungsspannung $U_{cmin}DEV$. Mehr als eine vorgegebene Spannungsdifferenz $\Delta U$ und/oder eine vorgegebene Unterschreitenszeit $\Delta t$ bzw. eine - positive - Funktion $f(\Delta U, \Delta t)$ der beiden vorgenannten Kriterien.

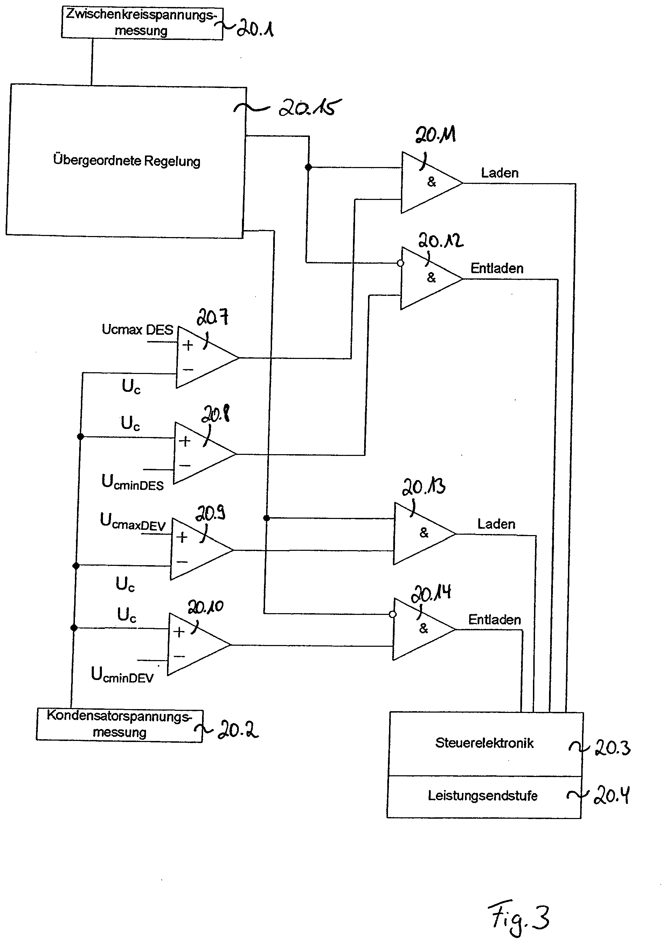

Die Ausgestaltung der Schaltung der Fig. 3 stimmt weitgehend mit der der Fig. 2 überein, wobei gleiche Teile mit gleichem Bezugszeichen versehen sind. Allerdings werden die aufgrund des Vergleichs der gemessenen Zwischenkreisspannung $U_z$ gewonnenen entsprechenden Eingangssignale für die UND-Glieder nicht durch den reinen Vergleich wie bei der Fig. 2 bestimmt. Vielmehr ist eine übergeordnete Regelung 20.15 vorgesehen, die zwar ebenfalls den Komparator 20.5 und 20.6 entsprechende Komparatoren enthält, bei denen aber die Regelspannung $U_{zrDES}$ und die Referenzspannung $U_{zrDEV}$ in geeigneter Weise verändert werden können, ebenso wie die Ausgangssignale der übergeordneten Regelung 20.15 zu den UND-Gliedern.

Im Übrigen ist aber die Schalt- und Steuerlogik die gleiche wie unter Fig. 2 beschrieben.

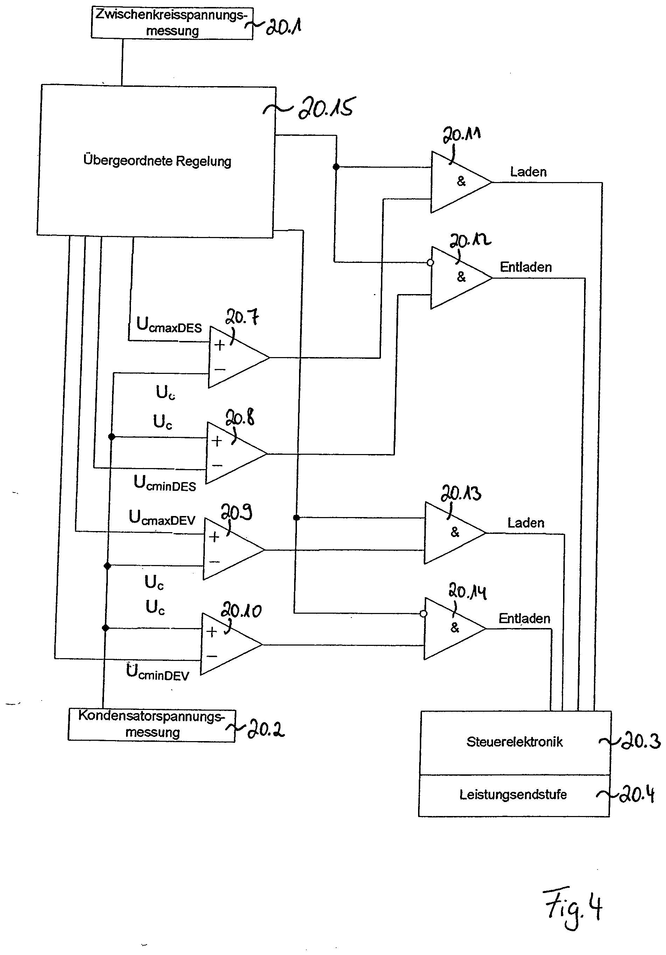

Entsprechendes gilt für die Fig. 4, die darüber hinaus statt, wie bei den Ausgestaltungen der Fig. 2 und 3 fest vorgegebener Vergleichsspannungen für den Zwischenspeicher 2.3 durch die übergeordnete Regelung 20.15 veränderliche Vergleichsspannungen ermöglicht, wie sie insbesondere für den regulären dynamischen Energiespeicherbetrieb in der DE 10 2011 121 154.7 im Detail beschrieben sind und hier in gleicher Weise als Vergleichsspannungen für den Zwischenspeicher 2.3 eingesetzt werden können. Die Funktionen der Schaltungen der Fig. 2 bis 4 können in einer einen Mikroprozessor aufweisenden Steuerelektronik realisiert sein. Darüber hinaus können die Steuersignale auch von einer übergeordneten Steuereinheit, wie in Form einer speicherprogrammierbaren Steuerung (SPS) geliefert und über eine Schnittstelle an die erfindungsgemäße Vorrichtung übergeben werden.

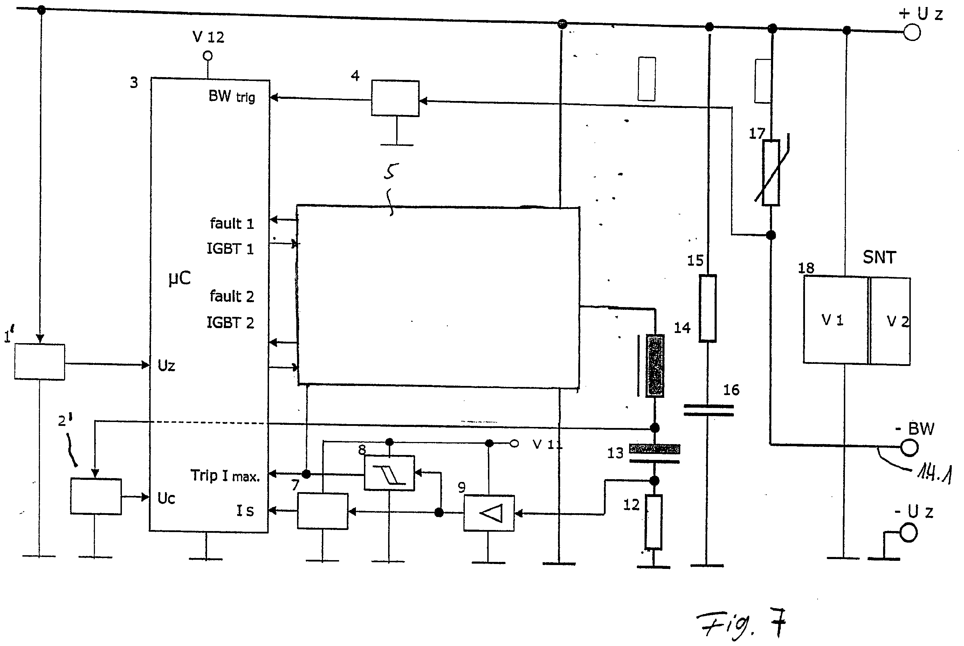

Die dynamische Energiespeichereinheit 2 der Fig. 1a ist genauer in der Fig. 7 dargestellt. Sie ist entsprechend der Fig. 1a im Zwischenspannungskreis zwischen der positiven Zwischenkreisspannung +Uz und der unteren Zwischenkreisspannung -Uz eingebunden, die letztere auf Masse gelegt ist. Der Speicherkondensator 13 ist mit letzterer über einen Strom-Shunt 12 und andererseits über eine Speicherdrossel mit einem Hoch-Tief-Setzsteller 5 als eine konkrete Ausgestaltung eines DC-DC-Stellers, wobei grundsätzlich auch andere Schaltungen möglich sind, verbunden. Ein erfindungsgemäß vorgesehener DC-DC-Steller ist ein Aufwärtswandler in die eine Richtung und ein Abwärtswandler in die andere (engl. Buck-Converter / Boost Converter). Diese bestehen aus zwei in Reihe geschalteten Transistoren mit je einer antiparallelen Diode und einer Drossel zwischen den beiden Transistoren. Beim Aufwärtswandler wird der untere Schalter und die obere Diode genutzt. Durch Einschalten des Schalters fällt die Eingangsspannung (niedrigere als der Ausgang) über der Drossel ab. Es baut sich ein Strom auf. Wenn der Schalter wieder geöffnet wird, möchte der Strom weiterfließen und tut dies gegen die höhere Ausgangsspannung. Es fließt also ein Strom von der niedrigen zu der hohen Spannung. Der Speicherkondensator ist weiter über den Hoch-Tief-Setzsteller insbesondere mit der oberen Zwischenkreisspannung +Uz verbunden, wobei der Hoch-Tief-Setzsteller entsprechend der EP 2 372 892 A1 ausgebildet ist, so dass zu seiner genauen Ausgestaltung und Funktionalität auf die Ausführungen in dieser Druckschrift, insbesondere ab Absatz [0037] verwiesen wird, die vollauf zum Gegenstand der vorliegenden Anmeldung gemacht werden.

Weiterhin weist die Schaltung in an sich bekannter Weise einen Mikrocontroller 3 sowie Spannungsteiler 1 und 2, zum einen zur Messung der Zwischenkreisspannung Uz des Umrichters, zum anderen zur Messung der Spannung des $U_c$ des Energiespeichers auf, wobei die Messungen in den Mikrocontroller 3 eingehen. Über einen weiteren Spannungsteiler 4 wird der Brems-Chopper-Ausgang 1.4.1 (Fig.1) des Wechselrichters 1.4 entsprechend seinem Einschaltzustand Wert -BW erfasst und als Trigger-Bremswert an den Mikrocontroller 3 übergeben. Zwischen Speicherkondensator 13 und Strom-Shunt 12 wird von einem Differenzverstärker 9 die Shunt-Spannung erfasst, die einerseits über einen Pegelanpasser zur Pegelanpassung für den Strom Istwert $I_s$ dient. Andererseits wird hierüber mittels einer Überstromerfassung 8 das Überschreiten eines absoluten Stromlimits erfasst und führt gegebenenfalls über den Eingang Trip I max des Mikrocontrollers 3 zur autarken Abschaltung.

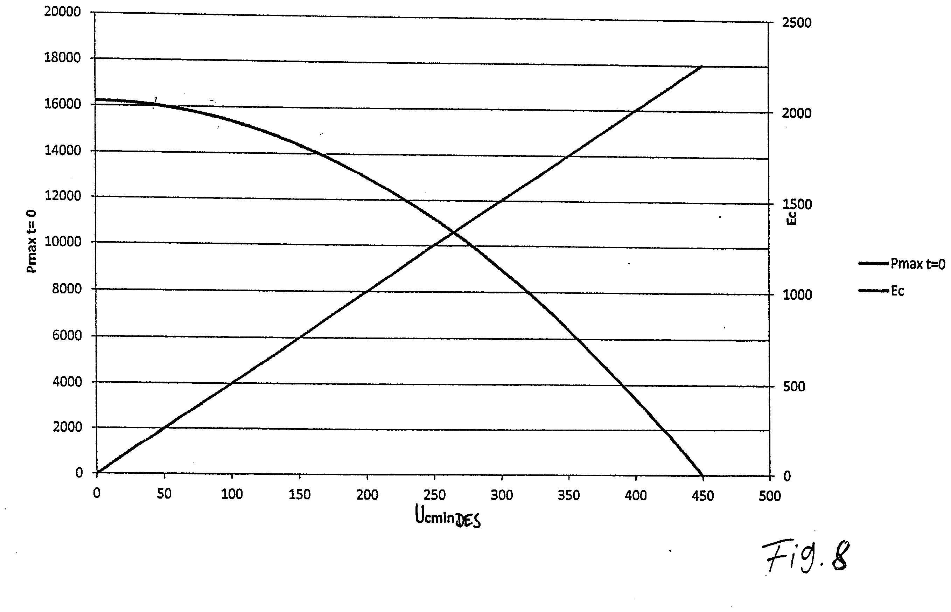

Mit 17 ist ein an sich bekannter Bremswiderstand bezeichnet, der als selbstbegrenzender Widerstand (PTC) ausgebildet sein kann. Wird der Motor gebremst und arbeitet demgemäß als Generator, steigt die Spannung im Zwischen- oder Gleichstromkreis 1.3.1 an, was eine Auslösung des Brems-Choppers bewirkt, wodurch der Brems-Chopper-Ausgang 1.4.1 auf die Spannung der Leitung -Zu des Zwischenkreises 1.3.1 gesetzt wird. Über ein Schaltnetzteil 18 wird die Spannungsversorgung V1 und V2 zur Spannungsversorgung des dynamischen Energiespeichers, wie beispielsweise der beiden Gate-Treiber des Hoch-Tief-Setzstellers, der Pegelanpassung 7, der Überstromerfassung 8 und des Differenzverstärkers 9 sowie des Mikrocontrollers 3, wobei insbesondere letzterer gegebenenfalls über weitere Regler abgenommen werden kann. Aus dem Diagramm der Fig. 8 ist für ein konkretes Ausführungsbeispiel ersichtlich, dass, während die Speicherkapazität des Kondensatorenergiespeichers mit steigender Ausgangs- oder Minimalspeicherspannung $U_{cminDES}$ am Energiespeicher progressiv abfällt. Die aufnehmbare Anfangsleistung $P_{max}$ zum Zeitpunkt t0, d.h. den Beginn des Speichervorganges linear ansteigt.

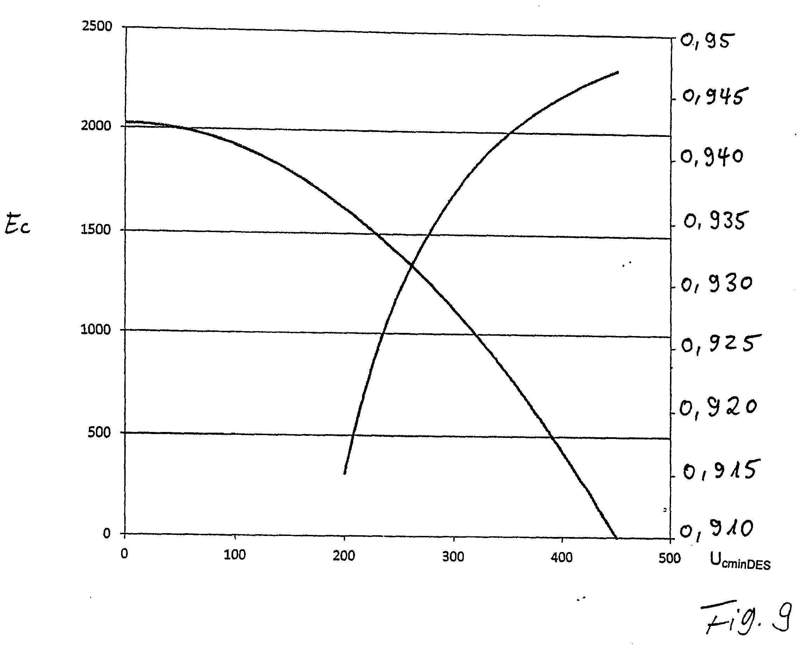

Die gleiche gegenläufige Tendenz gilt, wie sich quantitativ aus Fig. 9 ergibt, für Speicherkapazität und Wirkungsgrad, der letzterer sich mit höherer Minimalspeicherspannung $U_{cminDES}$ ebenfalls erhöht, allerdings degressiv.

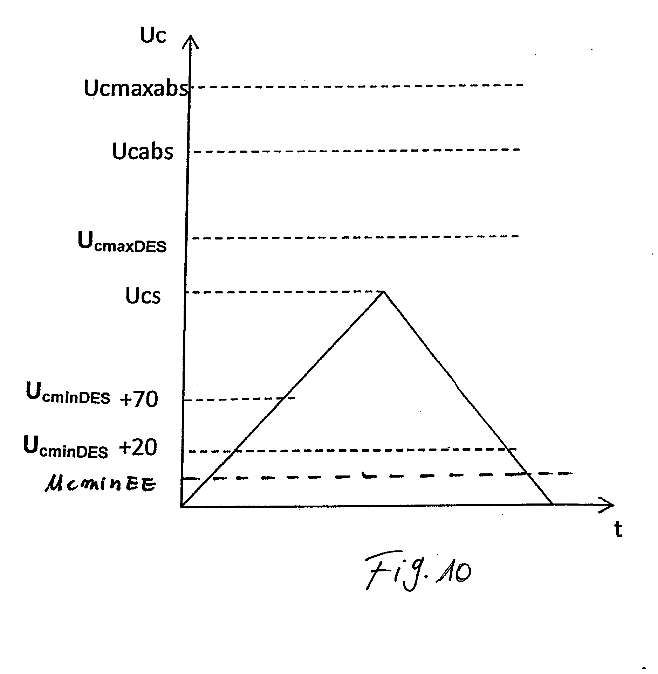

Der Fig. 10 sind zur Erläuterung die bei dem erfindungsgemäßen Verfahren maßgeblichen Spannungen am Energiespeicher bzw. am Kondensator bei einem schematisch dargestellten Spannungsverlauf über die Zeit dargestellt. Ein Speicherkondensator hat eine absolute Maximalspeicherspannung $U_{maxabs}$ (Absolut-Maximalspannung), die unter Strafe der Zerstörung des Kondensators auf keinen Fall erreicht werden darf. Unterhalb dieser absoluten Maximalspeicherspannung liegt eine für den Betrieb maßgebliche reguläre Maximalspeicherspannung $U_{cmaxDES}$ des Energiespeichers bzw. Kondensators, die allerdings kurzzeitig überschritten werden darf und im Rahmen des erfindungsgemäßen Verfahrens mit einer zu erfassenden dynamisch veränderlichen absoluten Kondensatorspannung oder $U_{cabs}$ auch dynamisch Absolut-Spannung kurzzeitig überschritten werden kann. Die fest vorgegebene absolute untere Minimalspannung des Kondensators, die im Verfahren nicht unterschritten wird, d.h. unterhalb derer keine Energie vom Kondensator abgegeben wird, ist mit $U_{cmin}EE$ bezeichnet. $U_{cminDES}$ bezeichnet die dynamisch veränderliche minimale Kondensatorspannung oder dynamisch veränderliche Minimalspeicherspannung, die durch das erfindungsgemäße Verfahren aufgrund des Arbeitsprozesses des Stromverbrauchers, also des Elektromotors, geregelt wird und zwar auf einem höheren Wert als $U_{cmin}EE$.

Das erfindungsgemäße Verfahren geht davon aus, dass zunächst eine absolute Minimalspannung $U_{cmin}EE$ größer als 0 gesetzt ist. Diese kann entweder bis zum Einsatz des erfindungsgemäßen Verfahrens auf einen bestimmten Wert festgelegt sein, wie dies beispielsweise in der EP 2 372 892 A1 unter [0039] beschrieben ist oder aber ausgehend hiervon dem jeweiligen Motor-Umrichter-System angepasst sein. Hierdurch wird sichergestellt, dass der dynamische Energiespeicher die Anfangsleistung aufnimmt, damit ein übermäßiges Ansteigen der Zwischenkreisspannung mit Abschalten des Wechselrichters vermieden wird.

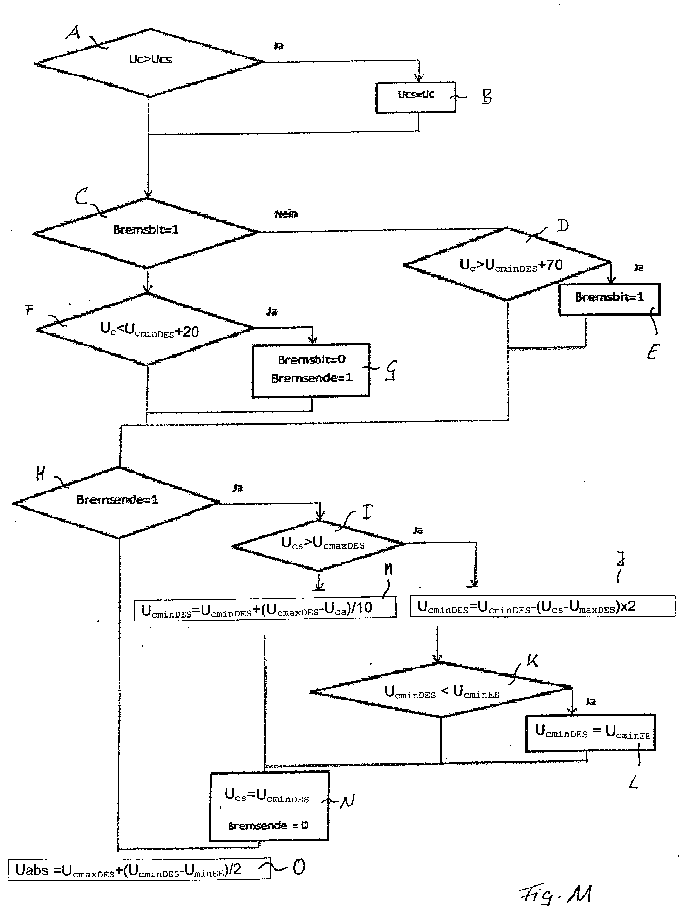

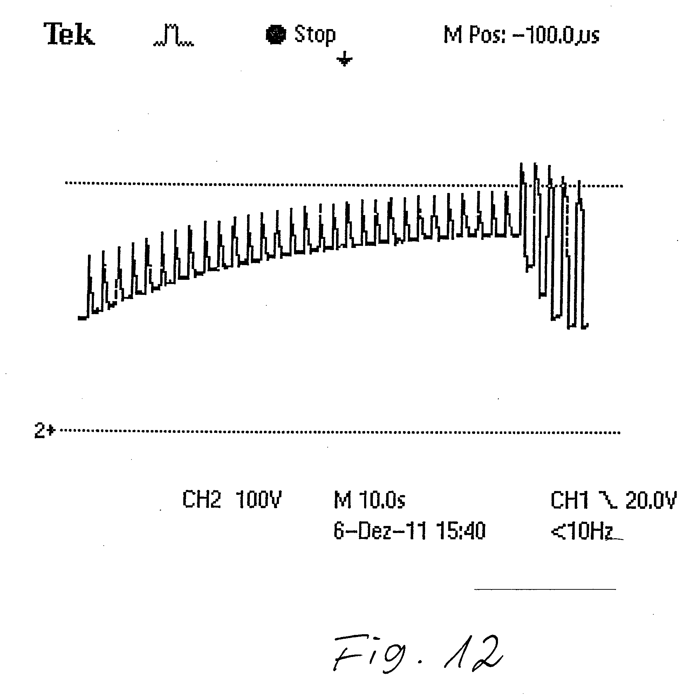

Hiervon ausgehend ist der Ablauf des erfindungsgemäßen Verfahrens während einer Bremsphase, deren eine durch eine Peak (Spitze) im Diagramm der Fig. 12 repräsentiert ist, im Ablaufdiagramm der Fig. 11 an einem konkreten Beispiel dargestellt.

Zunächst erfolgt im Schritt A die Überprüfung, ob die aktuelle Spannung $U_c$ am Kondensator eine gesetzte (Spitzen-)Spannung $U_{cs}$ überschreitet, in diesem Falle wird die gesetzte Spannung $U_{cs}$ auf die aktuelle Spannung $U_c$ gesetzt (Schritt B).

Im folgenden Schritt C wird überprüft, ob die Bremsphase schon erkannt und ein entsprechendes Bremsbit auf den Binärwert "1" gesetzt wurde. Ist dies nicht der Fall, so wird im Schritt D überprüft, ob die aktuelle Kondensatorspannung die dynamisch veränderliche, gesetzte Minimalspeicherspannung $U_{cminDES}$, die in ihrer dynamischen Veränderlichkeit in der Fig. 12 durch die dortigen unteren Spannungswerte (oder deren Einhüllende) gegeben ist, um einen vorgegebenen Wert, hier 70 Volt, überschreitet; ist dies der Fall, so wird hierdurch der Bremsvorgang erkannt und das Bremsbit auf den Binärwert 1 gesetzt (Schritt E).

War das Bremsbit gesetzt, liegt die aktuelle Spannung aber nur noch um einen gegenüber dem im Schritt D herangezogenen geringeren Wert von beispielsweise 20 Volt über der gesetzten dynamisch veränderlichen Minimalspannung, wird mit dem Schritt F das Ende des Bremsvorgangs erkannt und der Binärwert des Bremsbits auf "0", der Binärwert einer Kennung für das Bremsende auf den Binärwert "1" gesetzt (Schritt G). Diese Überwachungen werden während einer Bremsphase wiederholt, insbesondere die Anpassung von $U_{cs}$ an den - während der Bremsphase erzielten - maximalen Wert der Kondensatorspannung $U_c$.

Im Folgenden (Schritt H) erfolgt nun die Auswertung der Messung und die dynamische Anpassung der veränderlichen Minimalspeicherspannung $U_{cminDES}$, wenn das Bremsende, wie vorstehend erläutert, erreicht ist. Es wird zunächst im Schritt I überprüft, ob die vorher erreichte gesetzte Spitzenspannung $U_{cs}$ größer als die für den Regelbetrieb vorgegebene Maximalspeicherspannung $U_{cmaxDES}$ ist, die kurzfristig überschritten werden kann (Fig. 10 und Erläuterung hierzu). Ist dies nicht der Fall, so kann die dynamisch veränderliche Minimalspeicherspannung $U_{cminDES}$ vorsichtig, d.h. in kleinen Schritten erhöht werden. Dies geschieht im konkreten Ausführungsbeispiel dadurch, dass im Schritt J die genannte Minimalspeicherspannung $U_{cminDES}$ auf einen Wert gesetzt wird, der um ein Zehntel (Faktor a = 0,1) der Differenz zwischen der regulären Maximalspannung und der im Verfahrensablauf der gegebenen Bremsphase aufgrund der Messungen gesetzten Spitzenspannung $U_{cs}$ größer ist als die in der vorherigen Bremsphase gesetzte dynamisch veränderliche Minimalspeicherspannung $U_{cminDES}$, also

$$U_{cminDES} = U_{cminDES} + (U_{cmaxDES} - U_{cs}) / 10$$

Bei dem nach der Bremsphase gegebenen motorischen Betrieb der Last erfolgt eine Entladung des dynamischen Energiespeichers dann nicht mehr auf die absolute minimale Kondensatorspannung $U_{cmin}EE$ oder die vorher gegebene minimale Kondensatorspannung, sondern die bei der letzten Bremsphase gesetzte Minimalspeicherspannung $U_{cminDES}$, die in der Regel über den beiden vorgenannten Werten liegt.

Stellt sich allerdings bei der Überprüfung des Schrittes I heraus, dass die im vorherigen Verfahrensablauf der aktuellen Bremsphase gesetzte Spannung $U_{cs}$ die reguläre Maximalspeicherspannung $U_{cmaxDES}$ des Kondensators schon überschreitet, darf die dynamisch veränderliche Minimalspeicherspannung $U_{cminDES}$ nicht mehr erhöht, sondern muss vorsorglich abgesenkt werden, um zu vermeiden, dass die "zerstörerische" absolute Maximalspeicherspannung oder Absolut-Maximalspannung $U_{maxabs}$ (Fig. 10 und zugehörige Erläuterung) des Kondensators nicht erreicht wird. Hierzu wird in diesem Falle gemäß Schritt K die dynamisch veränderliche Minimalspeicherspannung $U_{cminDES}$ reduziert und zwar in einem größeren Schritt als bei einer Erhöhung, wenn eine solche, wie vorstehend beschrieben, möglich ist und zwar im konkreten Ausführungsbeispiel derart, dass die bisherige Minimalspeicherspannung $U_{cminDES}$ um das Zweifache (Faktor b = 2) der Differenz zwischen der während der Bremsphase gemessenen und damit gesetzten höchsten (Spitzen-)Spannung $U_{cs}$ und der regulären Maximalspeicherspannung vermindert wird, also

$$U_{cminDES} = U_{cminDES} - (U_{cs} - U_{cmaxDES}) \times 2.$$

Damit wird erreicht, dass, wenn in der folgenden Bremsphase der Spannungsanstieg während der Bremsphase nicht höher ist als in der beschriebenen laufenden, die reguläre Maximalspannung am Kondensator nicht mehr überschritten wird. Im Folgenden wird dann überprüft, ob die aufgrund des Überschreitens der regulären Maximalspannung angestrebte selbst angepasste Minimalspeicherspannung $U_{cminDES}$ die absolute minimale Kondensatorspannung $U_{cmin}EE$, die auf keinen Fall unterschritten werden darf, unterschreiten würde. Ist dies der Fall, so wird der Zwischenwert $U_{cminDES}$ der Minimalspeicherspannung wieder auf die absolute Minimalspeicherspannung des Kondensators oder Absolut-Minimalspannung $U_{cmin}EE$ heraufgesetzt (Schritt M). In beiden Fällen wird im Folgenden für die nächste Bremsphase der zur Überprüfung der aktuellen Kondensatorspannung vorgegebene gesetzte Spannungswert $U_{cs}$ auf die Minimalspeicherspannung $U_{cminDES}$ gesetzt (wobei die dynamisch veränderliche Minimalspeicherspannung $U_{cminDES}$ für die nächste Bremsphase schon - gegebenenfalls wie vorgesehen - gesetzt ist). Darüber hinaus wird die Statusanzeige für das Bremsende auf den Binärwert "0" gesetzt (Schritt N). Schließlich wird die dynamisch veränderliche Absolut-Spannung (oberhalb von der Maximalspeicherspannung $U_{cmaxDES}$) auf einen Wert gesetzt, der um die Hälfte (Faktor c = 2) der Differenz zwischen der Minimalspeicherspannung $U_c{-}_{minDES}$ und der Absolut-Minimalspannung $U_{cmin}EE$ über der regulären Maximalspeicherspannung $U_{cmaxDES}$ liegt:

$$U_{cabs} = U_{cmaxDES} + (U_{cminDES} - U_{cmin}EE) / 2.$$

$U_{cabs}$ ist ein Spannungswert und bestimmt die absolut oberste im Rahmen des erfindungsgemäßen Verfahrens zugelassene Spannung des Energiespeichers und ist der Spannungswert, auf dem der Energiespeicher (Kondensator) höchstens aufgegeben wird. Wird dieser entsprechend Schritt 0 im Verfahrensablauf gesetzte Wert erreicht, wird die Verbindung des Energiespeichers zum Umrichter 1 bzw. Zwischenkreis 1.3.1 getrennt, so dass weitere Bremsenergie während der Bremsphase über den Bremswiderstand abgebaut, d.h. in Wärme umgewandelt wird(hierzu auch die genannte Druckschrift, insbesondere ab Absatz [0044].

Der Ablauf der Spannungen $U_c$ am Energiespeicher bzw. Kondensator während mehrerer aufeinanderfolgender Bremsphasen beim erfindungsgemäßen Verfahren ist im Oszillatorbild der Fig. 12 dargestellt und zwar zunächst für den Fall, dass die reguläre Maximalspeicherspannung $U_{cmaxDES}$ am Kondensator nicht überschritten wird und damit die Anpassung der Minimalspeicherspannung $U_{cminDES}$ entsprechend der Schritte A bis I, J, O erfolgt, im der linken Teil der Fig. 7, während bei d in der Fig. 12 erstmals die gepunktet dargestellte reguläre Maximalspeicherspannung $U_{cmaxDES}$ überschritten wird und der Verfahrensablauf gemäß der vorstehenden Schilderung für die weiteren dort - rechts - dargestellten Bremsphasen bis zum Unterschreiten der $U_{cmaxDES}$-Linie von dem Schritt I ausgehend über die Schritte K, L, M erfolgt. Es ist deutlich, dass der Anstieg der dynamisch veränderlichen Minimalspeicherspannung $U_{cminDES}$, solange die Maximalspeicherspannung $U_{cmaxDES}$ beim Laden des Energiespeicherkondensators nicht erreicht wird, relativ langsam erfolgt und langsamer als beim Überschreiten der genannten Maximalspeicherspannung $U_{cmaxDES}$ aufgrund einer Bremsmusteränderung die Absenkung der dynamisch veränderlichen Minimalspeicherspannung $U_{cminDES}$ am rechten Ende des Oszillatorbildes. Die Absenkung erfolgt schnell, so dass die Spitzenspannung $U_{cs}$ sich ebenfalls möglichst schnell wieder an die Maximalspeicherspannung $U_{cmaxDES}$ annähert, was in der letzten dargestellten Bremsphase nahezu erreicht ist.

Durch das beschriebene adaptive oder Regelverfahren der dynamisch veränderlichen Minimalspeicherspannung $U_{cminDES}$ des Energiespeichers (Kondensators) wird erreicht, dass bei Sicherstellung einer noch möglichst großen Speicherkapazität des Energiespeichers dennoch sowohl die aufnehmbare Anfangsleistung nach Eintritt des Bremsvorganges als auch der Wirkungsgrad der Speicherung maximiert und damit der gesamte Speichervorgang optimiert werden.

**Bezugszeichenliste**

| | |
|---|---|
| 1 | Umrichter |
| 1.1 | Last |
| 1.2 | Elektromotor |
| 1.3 | Gleichrichter |
| 1.4 | Wechselrichter |
| 1.4.1 | Bremsstopperansteuerung |
| 1.5 | Zwischenkreis |

| | |
|---|---|
| 2 | Energiespeichereinheit |
| 2.1 | Schalter/Chopper |
| 2.2 | Steuereinrichtung / DC-DC-Steller |
| 2.3 | Energie- oder Zwischenspeicher |

| | |
|---|---|
| 20 | Steueinrichtung |
| 20.1 | Zwischenkreisspannungsmesser |
| 20.2 | Kondensatorspannungsmesser |
| 20.3 | Steuerelektronik |
| 20.4 | Leistungsendstufe |
| 20.5-20.10 | Komparatoren |
| 20.11-20.14 | UND-Glieder |
| 20.15 | übergeordnete Regelung |

**Patentansprüche**

1. Verfahren zum Zwischenspeichern elektrischer Energie aus einem Zwischenkreis (1.5) eines elektrischen Verbrauchers in einen elektrischen Zwischenspeicher (2.3), insbesondere bei einem an einen Wechselrichter (1.3) angeschlossenen Elektromotor (1.2), wobei ein Regelbetrieb bei einer ersten Regelspannung $U_{zrDES}$ des Zwischenkreises (1.5) erfolgt und wobei während einer Bremsphase des Motors (1.3) Energie aus dem Zwischenkreis (1.5) in den Zwischenspeicher (2.3) gespeichert wird, und bei Abfall der Zwischenkreisspannung $U_z$ im Zwischenkreis unter einen unterhalb der ersten Regelspannung $U_{zrDES}$ liegende endliche Referenzspannung $U_{zrDEV}$ des Zwischenkreises aus dem Zwischenspeicher (2.3) Energie zur Unterstützung des Zwischenkreises (1.5) abgegeben wird, **dadurch gekennzeichnet,**
**dass** bei erneutem Überschreiten der Referenzspannung $U_{zrDEV}$ keine Energie aus dem Zwischenspeicher (2.3) an den Zwischenkreis (1.5) abgegeben wird, soweit nicht sowohl die Zwischenspeicherspannung $U_c$ oberhalb einer endlichen Minimalspeicherspannung $U_{cminDES}$ liegt als auch die Zwischenkreisspannung $U_z$ die Regelspannung $U_{zrDES}$ unterschreitet.

2. Verfahren nach Anspruch 1, **dadurch gekennzeichnet, dass** der Zwischenspeicher (2.3) aus dem Zwischenkreis (1.5) geladen wird, wenn sowohl die Speicherspannung $U_c$ eine Versorgungsspannung $U_{cmaxDES}$ des Zwischenspeichers (2.3) unterschreitet als auch die Zwischenkreisspannung $U_z$ oberhalb der Referenzspannung $U_{zrDEV}$ liegt.

3. Verfahren nach einem der vorangehenden Ansprüche, **dadurch gekennzeichnet, dass** der Zwischenspeicher (2.3) aus dem Zwischenkreis (1.1) geladen wird, wenn sowohl die Zwischenkreisspannung $U_z$ oberhalb der Referenzspannung $U_{zrDEV}$ liegt als auch die Speicherspannung $U_c$ unterhalb einer Regelversorgungsspannung $U_{cmaxDEV}$ des Zwischenspeichers (2.3) liegt oder aber sowohl die Zwischenkreisspannung $U_z$ oberhalb der Regelspannung $U_{zrDES}$ des Zwischenkreises (1.5) liegt und die Speicherspannung $U_c$ unterhalb einer Maximalspeicherspannung $U_{cmaxDES}$ liegt.

4. Verfahren nach einem der vorangehenden Ansprüche, **dadurch gekennzeichnet, dass** der Zwischenkreis (1.5) durch Energieabgabe aus dem Zwischenspeicher (2, 3) unterstützt wird, wenn sowohl die Zwischenkreisspannung $U_z$ die Regelspannung $U_{zrDES}$ unterschreitet als auch die Speicherspannung $U_c$ oberhalb der Minimalspeicherspannung $U_{cminDEs}$ liegt.

5. Verfahren nach einem der vorangehenden Ansprüche, **dadurch gekennzeichnet, dass** die Minimalspeicherspannung $U_{cminDES}$ größer als die Regelversorgungsspannung $U_{c\text{-}maxDEV}$ ist oder dass die Minimalspeicherspannung $U_{cminDES}$ gleich der Regelspannung $U_{cmaxDEV}$ ist.

6. Verfahren nach einem der vorangehenden Ansprüche, **dadurch gekennzeichnet, dass** im motorischen Betrieb des Motors (1.3), insbesondere in einer Anfahr- und/oder Beschleunigungsphase, Energie aus dem Zwischenspeicher (2.3) zur Unterstützung des Betriebs in den Zwischenkreis (1.5) abgegeben wird, solange die Zwischenspeicherspannung über einer einstellbaren ersten Minimalspeicherspannung $U_{cminDES}$ am Zwischenspeicher (2.3) liegt.

7. Verfahren nach einem der vorangehenden Ansprüche, **dadurch gekennzeichnet, dass** der Motor kontrolliert in den Stillstand gefahren wird, wenn die Zwischenkreisspannung $U_z$ die Referenzspannung $U_{zrDEV}$ über eine vorgegebene Zeit $\Delta t$ und/oder um einen vorgegebenen Differenzwert $\Delta U_{zr}$ oder einen vorgegebenen Wert einer monoton ansteigenden Funktion $f(\Delta t, \Delta U_{zr})$ von $\Delta t$ und $\Delta U_{zr}$ unterschreitet.

8. Verfahren nach einem der vorangehenden Ansprüche, **dadurch gekennzeichnet, dass** Energieaufnahme und -abgabe des Zwischenspeichers (2.3) jeweils durch ein Steuersignal gesteuert wird, das aufgrund des Vergleichs gewonnen wird.

9. Verfahren nach einem der vorangehenden Ansprüche, **dadurch gekennzeichnet, dass** signifikante Zwischenkreisspannungswerte, wie Regelspannung $U_{zrDES}$ und Referenzspannung $U_{zrDEV}$ fest vorgegeben werden oder aber dass signifikante Zwischenkreisspannungswerte, wie Regelspannung $U_{zrDES}$ und Referenzspannung $U_{zrDEV}$ dynamisch ermittelt und angepasst werden.

10. Vorrichtung zum Zwischenspeichern elektrischer Energie aus einem Zwischenkreis (1.5), insbesondere eines mit diesem über einen Wechselrichter (1.4) verbundenen Elektromotors (1.2), mit einem Zwischenkreis (1.5), einem Wechselrichter (1.4) und einem Zwischenspeicher (2.3) für elektrische Energie sowie einer Steuereinrichtung (20), wobei ein Regelbetrieb bei einer ersten Regelspannung $U_{zrDES}$ des Zwischenkreises (1.5) erfolgt und die Steuereinrichtung (20) dazu ausgestaltet ist, überschüssige Energie im Zwischenspeicher (2.3) zu speichern und bei erhöhter Leistungsanforderung an den Wechselrichter (1.3) zum Zwischenkreis (1.5) bis zu einer Minimalspeicherspannung $U_{cminDES}$ abzugeben, und wobei die Steuereinrichtung (20) weiterhin dazu ausgebildet ist, bei Spannungsabfall der Zwischenkreisspannung $U_z$ im Zwischenkreis (1.5) unter eine unterhalb der Regelspannung $U_{zrDES}$ des Zwischenkreises (1.5) liegender endlicher Referenzspannung $U_{zrDEV}$ des Zwischenkreises (1.5) Energie aus dem Zwischenspeicher (2.3) in den Zwischenkreis (1.5) abzugeben,
**dadurch gekennzeichnet,**

**dass** die Steuereinrichtung (20) dazu ausgebildet ist, dass bei erneutem Überschreiten der Referenzspannung $U_{zrDEV}$ keine Energie aus dem Zwischenspeicher (2.3) an den Zwischenkreis (1.5) abgegeben wird, soweit nicht sowohl die Zwischenspeicherspannung $U_c$ oberhalb einer endlichen Minimalspeicherspannung $U_{cminDES}$ liegt als auch die Zwischenkreisspannung $U_{zr}$ die Regelspannung $U_{zrDES}$ unterschreitet.

11. Vorrichtung nach Anspruch 10, **dadurch gekennzeichnet, dass** die Steuereinrichtung (20) dazu ausgebildet ist, dass der Zwischenspeicher (2.3) aus dem Zwischenkreis (1.5) geladen wird, wenn sowohl die Speicherspannung $U_c$ eine Maximalspeicherspannung $U_{cmaxDES}$ des Zwischenspeichers (2.3) unterschreitet als auch die Zwischenkreisspannung $U_z$ oberhalb der Referenzspannung $U_{zrDEV}$ liegt.

12. Vorrichtung nach einem der Ansprüche 10 oder 11, **dadurch gekennzeichnet, dass** die Steuereinrichtung (20) dazu ausgebildet ist, dass der Zwischenspeicher (2.3) aus dem Zwischenkreis (1.1) geladen wird, wenn sowohl die Zwischenkreisspannung $U_z$ oberhalb der Referenzspannung $U_{zrDEV}$ liegt als auch die Speicherspannung $U_c$ unterhalb einer Regelversorgungsspannung $U_{cmaxDEV}$ des Zwischenspeichers (2.3) liegt oder aber sowohl die Zwischenkreisspannung $U_z$ oberhalb der Regelspannung $U_{zrDES}$ des Zwischenkreises (1.5) liegt und die Speicherspannung $U_c$ unterhalb einer Maximalspeicherspannung $U_{cmaxDES}$ liegt.

13. Vorrichtung nach einem der Ansprüche 10 bis 12, **dadurch gekennzeichnet, dass** die Steuereinrichtung (20) dazu ausgebildet ist, dass der Zwischenkreis (1.5) durch Energieabgabe aus dem Zwischenspeicher (2, 3) unterstützt wird, sowohl die Zwischenkreisspannung $U_z$ die Regelspannung $U_{zrDES}$ unterschreitet als auch die Speicherspannung $U_c$ oberhalb der Minimalspeicherspannung $U_{cminDES}$ liegt.

14. Vorrichtung nach einem der Ansprüche 10 bis 13, **dadurch gekennzeichnet, dass** die Steuereinrichtung (20) dazu ausgebildet ist, dass die Minimalspeicherspannung $U_{cminDES}$ größer als die Regelversorgungsspannung $U_{cmaxDEV}$ ist oder dass die Minimalspeicherspannung $U_{cminDES}$ gleich der Regelversorgungsspannung $U_{cmaxDEV}$ ist.

15. Vorrichtung nach einem der Ansprüche 10 bis 14, **dadurch gekennzeichnet, dass** die Steuereinrichtung (20) dazu ausgebildet ist, dass im motorischen Betrieb des Motors (1.3), insbesondere in einer Anfahr- und/oder Beschleunigungsphase, Energie aus dem Zwischenspeicher (2.3) zur Unterstützung des Betriebs in den Zwischenkreis (1.5) bis zum Erreichen einer einstellbaren ersten Minimalspeicherspannung $U_{cminDES}$ am Zwischenspeicher (2.3) abgegeben wird.

16. Vorrichtung nach einem der Ansprüche 10 bis 15, **dadurch gekennzeichnet, dass** die Steuereinrichtung (20) dazu ausgebildet ist, dass der Motor kontrolliert in den Stillstand gefahren wird, wenn die Zwischenkreisspannung $U_z$ die Referenzspannung $U_{zrDEV}$ über eine vorgegebene Zeit $\Delta t$ und/oder um einen vorgegebenen Differenzwert $\Delta U_{zr}$ oder eine positive Funktion $f(\Delta t, \Delta U_{zr})$ von $\Delta t$ und $\Delta U_{zr}$ unterschreitet.

17. Vorrichtung nach einem der Ansprüche 10 bis 16, **dadurch gekennzeichnet, dass** die Steuereinrichtung (20) zur Erzeugung eines Steuersignals zur Bewirkung von Energieaufnahme und Energieabgabe durch den bzw. vom Zwischenspeicher ausgebildet ist.

18. Vorrichtung nach einem der Ansprüche 10 bis 17, **gekennzeichnet durch** Komparatoren (20.5-20.10), die gemessene Spannung $U_z$, $U_c$ von Zwischenkreis und Zwischenspeicher mit vorgegebenen Spannungswerten ($U_{zrDES}$, $U_{zrDEV}$; $U_{cminDES}$, $U_{cmaxDES}$, $U_{cminDEV}$, $U_{cmaxDEV}$) vergleichen.

19. Vorrichtung nach einem der Ansprüche 10 bis 18, **gekennzeichnet durch** eine übergeordnete Regelungseinheit (20.15), die dazu ausgebildet ist, signifikante Zwischenkreisspannungswerte ($U_{cminDES}$, $U_{cmaxDES}$, $U_{cminDEV}$, $U_{cmaxDEV}$) zum Vergleich mit gemessenen Spannungswerten $U_z$, $U_c$) im Zwischenkreis (1.5) und/oder Zwischenspeicher (2.3) dynamisch zu ermitteln und anzupassen.

**Claims**

1. A method for intermediate storing electrical energy from an intermediate circuit (1.5) of an electrical load into an electrical intermediate storage device (2.3), in particular, for an electric motor (1.2) connected to an inverter (1.3), wherein a control operation takes place at a first control voltage $U_{zrDES}$ of the intermediate circuit (1.5), and wherein energy from the intermediate circuit (1.5) is stored into the intermediate storage device (2.3) during a braking phase of the motor (1.3), and if the intermediate circuit voltage $U_z$ in the intermediate circuit falls below a finite reference voltage $U_{zrDEV}$ of the intermediate circuit, which is below the first control voltage $U_{zrDES}$, then energy is delivered from the intermediate storage device (2.3) in order to support the intermediate circuit (1.5),

**characterized in that**

when the reference voltage $U_{zrDEV}$ is again exceeded, no energy is delivered from the intermediate storage device (2.3) to the intermediate circuit (1.5) unless both the intermediate storage device voltage $U_c$ is above a finite minimum storage device voltage $U_{cminDES}$ and the intermediate circuit voltage $U_z$ is below the control voltage $U_{zrDES}$.

2. The method according to claim 1, **characterized in that**
the intermediate storage device (2.3) is charged from the intermediate circuit (1.5) if both the storage device voltage $U_c$ is below a supply voltage $U_{cmaxDES}$ of the intermediate circuit (2.3) and the intermediate circuit voltage $U_z$ is above the reference voltage $U_{zrDEV}$.

3. The method according to any of the preceding claims, **characterized in that** the intermediate storage device (2.3) is charged from the intermediate circuit (1.1) if both the intermediate circuit voltage $U_z$ is above the reference voltage $U_{zrDEV}$ and the storage device voltage $U_c$ is below a control supply voltage $U_{cmaxDEV}$ of the intermediate storage device (2.3), or, however, both the intermediate circuit voltage $U_z$ is above the control voltage $U_{zrDES}$ of the intermediate circuit (1.5) and the storage device voltage $U_c$ is below a maximum storage device voltage $U_{cmaxDES}$.

4. The method according to any of the preceding claims, **characterized in that** the intermediate circuit (1.5) is supported by energy delivered from the intermediate storage device (2.3) if both the intermediate circuit voltage $U_z$ is below the control voltage $U_{zrDES}$ and the storage device voltage $U_c$ is above the minimum storage device voltage $U_{cminDES}$.

5. The method according to any of the preceding claims, **characterized in that** the minimum storage device voltage $U_{cminDES}$ is greater than the control supply voltage $U_{cmaxDEV}$ or the minimum storage device voltage $U_{cminDES}$ is equal to the control voltage $U_{cmaxDEV}$.

6. The method according to any of the preceding claims, **characterized in that** in the motorized operation of the motor (1.3), in particular, in a start-up and/or acceleration phase, energy is delivered from the intermediate storage device (2.3) in order to support the operation in the intermediate circuit (1.5) as long as the intermediate storage device voltage is above an adjustable first minimum storage device voltage $U_{cminDES}$ in the intermediate storage device (2.3).

7. The method according to any of the preceding claims, **characterized in that** the motor is transferred to standstill in a controlled manner if the intermediate circuit voltage $U_z$ is below the reference voltage $U_{zrDEV}$ over a predetermined time $\Delta t$ and/or by a predetermined differential value $\Delta U_{zr}$ or a predetermined value of a monotonically increasing function $f(\Delta t, \Delta U_{zr})$ of $\Delta t$ and $\Delta U_{zr}$.

8. The method according to any of the preceding claims, **characterized in that** energy consumption and/or output of the intermediate storage device (2.3) is respectively controlled by a control signal that is obtained on the basis of the comparison.

9. The method according to any of the preceding claims, **characterized in that** significant intermediate circuit voltage values such as the control voltage $U_{zrDES}$ and the reference voltage $U_{zrDEV}$ are fixed and predetermined, or, however, significant intermediate circuit voltage values such as the control voltage $U_{zrDES}$ and the reference voltage $U_{zrDEV}$ are dynamically identified and adapted.

10. A device for intermediate storage of electrical energy from an intermediate circuit (1.5), particular, of an electric motor (1.2) connected thereto via an inverter (1.4), comprising an intermediate circuit (1.5), an inverter (1.4), and an intermediate storage device (2.3) for electrical energy, as well as a control device (20), wherein a control operation takes place at a first control voltage $U_{zrDES}$ of the intermediate circuit (1.5), and the control device (20) is configured in order to store excess energy in the intermediate storage device (2.3) and to deliver said excess energy on increased power demand from the inverter (1.3) to the intermediate circuit (1.5) up to a minimum storage device voltage $U_{cminDES}$, and wherein the control device (20) is furthermore configured in order to deliver energy from the intermediate storage device (2.3) to the intermediate circuit (1.5) if there is a voltage drop of the intermediate circuit voltage $U_z$ in the intermediate circuit (1.5) under a finite reference voltage $U_{zrDEV}$ of the intermediate circuit (1.5) that is below the control voltage $U_{zrDES}$ of the intermediate circuit (1.5), **characterized in that**

the control device (20) is configured so that when the reference voltage $U_{zrDEV}$ is again exceeded, no energy is delivered from the intermediate storage device (2.3) to the intermediate circuit (1.5) unless both the intermediate storage device voltage $U_c$ is above a finite minimum storage device voltage $U_{cminDES}$ and the intermediate circuit voltage $U_z$ is below the control voltage $U_{zrDES}$.

**11.** The device according to claim 10, **characterized in that**
the control device (20) is configured so that the intermediate storage device (2.3) is charged from the intermediate circuit (1.5) if both the storage device voltage $U_c$ is below a maximum storage device voltage $U_{cmaxDES}$ of the intermediate circuit (2.3) and the intermediate circuit voltage $U_z$ is above the reference voltage $U_{zrDEV}$.

**12.** The device according to claim 10 to 11, **characterized in that**
the control device (20) is configured so that the intermediate storage device (2.3) is charged from the intermediate circuit (1.1) if both the intermediate circuit voltage $U_z$ is above the reference voltage $U_{zrDEV}$ and the storage device voltage $U_c$ is below a control supply voltage $U_{cmaxDEV}$ of the intermediate storage device (2.3), or, however, both the intermediate circuit voltage $U_z$ is above the control voltage $U_{zrDES}$ of the intermediate circuit (1.5) and the storage device voltage $U_c$ is below a maximum storage device voltage $U_{cmaxDES}$.

**13.** The device according to any of claims 10 to 12, **characterized in that**
the control device (20) is configured so that the intermediate circuit (1.5) is supported by energy delivered from the intermediate storage device (2.3) if both the intermediate circuit voltage $U_z$ is below the control voltage $U_{zrDES}$ and the storage device voltage $U_c$ is above the minimum storage device voltage $U_{cminDES}$.

**14.** The device according to any of claims 10 to 13, **characterized in that**
the control device (20) is configured so that the minimum storage device voltage $U_{cminDES}$ is greater than the control supply voltage $U_{cmaxDEV}$ or the minimum storage device voltage $U_{cminDES}$ is equal to the control supply voltage $U_{cmaxDEV}$.

**15.** The device according to any of claims 10 to 14, **characterized in that**
the control device (20) is configured so that in the motorized operation of the motor (1.3), in particular, in a start-up and/or acceleration phrase, energy is delivered from the intermediate storage device (2.3) in order to support the operation in the intermediate circuit (1.5) until an adjustable first minimum storage device voltage $U_{cminDES}$ is achieved at the intermediate storage device (2.3).

**16.** The device according to any of claims 10 to 15, **characterized in that**
the control device (20) is configured so that the motor is transferred to standstill in a controlled manner if the intermediate circuit voltage $U_z$ is below the reference voltage $U_{zrDEV}$ over a predetermined time $\Delta t$ and/or by a predetermined differential value $\Delta U_{zr}$ or a positive function $f(\Delta t, \Delta U_{zr})$ of $\Delta t$ and $\Delta U_{zr}$.

**17.** The device according to any of claims 10 to 16, **characterized in that**
the control device (20) is configured in order to generate a control signal for effectuating energy consumption and energy output by/from the intermediate storage device.

**18.** The device according to any of claims 10 to 17, **characterized by** comparators (20.5-20.10) that compare measured voltage $U_z$, $U_c$ of the intermediate circuit and intermediate storage device with predetermined voltage values ($U_{zrDES}$, $U_{zrDEV}$; $U_{cminDES}$, $U_{cmaxDES}$, $U_{cminDEV}$, $U_{cmaxDEV}$).

**19.** The device according to any of claims 10 to 18, **characterized by** a higher-level control unit (20.15) that is configured in order to dynamically identify and adapt significant intermediate circuit voltage values ($U_{cminDES}$, $U_{cmaxDES}$, $U_{cminDEV}$, $U_{cmaxDEV}$) for comparison with measured voltage values ($U_z$, $U_c$) in the intermediate circuit (1.5) and/or intermediate storage device (2.3).

**Revendications**

**1.** Procédé de stockage intermédiaire d'énergie électrique provenant d'un circuit intermédiaire (1.5) d'un consommateur électrique dans un accumulateur intermédiaire (2.3) électrique, notamment dans un moteur électrique (1.2) raccordé à un onduleur (1.3), une opération de réglage étant effectuée à une première tension de réglage $U_{zrDES}$ du circuit intermédiaire (1.5) et l'énergie provenant du circuit intermédiaire (1.5) étant accumulée dans l'accumulateur intermédiaire (2.3) pendant une phase de freinage du moteur (1.3) et en cas de chute de la tension du circuit intermédiaire $U_z$ dans le circuit intermédiaire en dessous d'une tension de référence $U_{zrDEV}$ inférieure à la première tension de réglage $U_{zrDES}$ finale du circuit intermédiaire, l'énergie sortant de l'accumulateur intermédiaire (2.3) est restituée pour soutenir le circuit intermédiaire (1.5), **caractérisé en ce qu'**en cas de nouveau passage au-dessus de la tension de référence $U_{zrDEV}$, aucune énergie provenant de l'accumulateur intermédiaire (2.3) n'est restituée au circuit intermédiaire (1.5) tant qu'à la fois la tension d'accumulateur intermédiaire $U_c$ ne passe pas au-dessus d'une tension d'accumulateur minimale $U_{cminDES}$ finale et que la tension du circuit intermédiaire $U_z$ ne passe pas en dessous de la tension de réglage $U_{zrDES}$.

2. Procédé selon la revendication 1, **caractérisé en ce que** l'accumulateur intermédiaire (2.3) est chargé à partir du circuit intermédiaire (1.5) lorsqu'à la fois la tension d'accumulateur $U_c$ passe en dessous d'une tension d'alimentation $U_{cmaxDES}$ de l'accumulateur intermédiaire (2.3) et que la tension du circuit intermédiaire $U_z$ se situe au-dessus de la tension de référence $U_{zrDEV}$.

3. Procédé selon l'une quelconque des revendications précédentes, **caractérisé en ce que** l'accumulateur intermédiaire (2.3) est chargé à partir du circuit intermédiaire (1.1) lorsqu'à la fois la tension du circuit intermédiaire $U_z$ se situe au-dessus de la tension de référence $U_{zrDEV}$ et que la tension d'accumulateur $U_c$ se situe en dessous d'une tension d'alimentation de réglage $U_{cmaxDES}$ de l'accumulateur intermédiaire (2.3) ou que tant la tension du circuit intermédiaire $U_z$ se situe au-dessus de la tension de réglage $U_{zrDES}$ du circuit intermédiaire (1.5) et que la tension d'accumulateur $U_c$ se situe en dessous d'une tension d'accumulateur maximale $U_{cmaxDES}$.

4. Procédé selon l'une quelconque des revendications précédentes, **caractérisé en ce que** le circuit intermédiaire (1.5) est soutenu par une restitution d'énergie provenant de l'accumulateur intermédiaire (2, 3) lorsqu'à la fois la tension du circuit intermédiaire $U_z$ passe en dessous de la tension de réglage $U_{zrDES}$ et que la tension d'accumulateur $U_c$ passe au-dessus de la tension d'accumulateur minimale $U_{cminDES}$.

5. Procédé selon l'une quelconque des revendications précédentes, **caractérisé en ce que** la tension d'accumulateur minimale $U_{cminDES}$ est supérieure à la tension d'alimentation de réglage $U_{cmaxDES}$ ou que la tension d'accumulateur minimale $U_{cminDES}$ est égale à la tension de réglage $U_{cmaxDES}$.

6. Procédé selon l'une quelconque des revendications précédentes, **caractérisé en ce qu'**en mode motorisé du moteur (1.3), notamment dans une phase de démarrage et/ou d'accélération, l'énergie provenant de l'accumulateur intermédiaire (2.3) est restituée pour soutenir le fonctionnement dans le circuit intermédiaire (1.5) tant que la tension d'accumulateur intermédiaire se situe au-dessus d'une première tension d'accumulateur minimale $U_{cminDES}$ réglable au niveau de l'accumulateur intermédiaire (2.3).

7. Procédé selon l'une quelconque des revendications précédentes, **caractérisé en ce que** le moteur est conduit de façon contrôlée à l'arrêt lorsque la tension du circuit intermédiaire $U_Z$ passe en dessous de la tension de référence $U_{zrDEV}$ pendant une durée $\Delta t$ prédéfinie et/ou pour une valeur de différence $\Delta U_{zr}$ prédéfinie ou une valeur prédéfinie d'une fonction croissante monotone $f(\Delta t, \Delta U_{zr})$ de $\Delta t$ et $\Delta U_{zr}$.

8. Procédé selon l'une quelconque des revendications précédentes, **caractérisé en ce que** l'absorption et la restitution d'énergie de l'accumulateur intermédiaire (2.3) est respectivement commandée par un signal de commande obtenu sur la base de la comparaison.

9. Procédé selon l'une quelconque des revendications précédentes, **caractérisé en ce que** des valeurs de tension de circuit intermédiaire significatives, par exemple la tension de réglage $U_{zrDES}$ et la tension de référence $U_{zrDEV}$ sont prédéfinies de façon fixe ou que des valeurs de tension de circuit intermédiaire significatives, par exemple la tension de réglage $U_{zrDES}$ et la tension de référence $U_{zrDEV}$ sont calculées et adaptées dynamiquement.

10. Dispositif de stockage intermédiaire d'énergie électrique provenant d'un circuit intermédiaire (1.5), notamment d'un moteur électrique (1.2) relié à lui via un onduleur (1.4), avec un circuit intermédiaire (1.5), un onduleur (1.4) et un accumulateur intermédiaire (2.3) pour l'énergie électrique ainsi qu'un dispositif de commande (20), une opération de réglage étant effectuée pour la première tension de réglage $U_{zrDES}$ du circuit intermédiaire (1.5) et le dispositif de commande (20) étant configuré pour accumuler l'énergie en surplus dans l'accumulateur intermédiaire (2.3) et pour la restituer en cas de demande de puissance accrue au niveau de l'onduleur (1.3) conduisant au circuit intermédiaire (1.5) jusqu'à une tension d'accumulateur minimale $U_{cminDES}$ et le dispositif de commande (20) étant en outre réalisé pour restituer, en cas de chute de tension de la tension du circuit intermédiaire $U_z$ dans le circuit intermédiaire (1.5) en dessous d'une tension de référence $U_{zrDEV}$ finale située sous la tension de réglage $U_{zrDES}$ du circuit intermédiaire (1.5) du circuit intermédiaire (1.5), l'énergie provenant de l'accumulateur intermédiaire (2.3) dans le circuit intermédiaire (1.5), **caractérisé en ce que** le dispositif de commande (20) est réalisé pour qu'en cas de nouveau passage au-dessus de la tension de référence $U_{zrDEV}$, aucune énergie provenant de l'accumulateur intermédiaire (2.3) ne soit restituée au circuit intermédiaire (1.5) tant qu'à la fois la tension d'accumulateur intermédiaire $U_c$ ne se situe pas au-dessus d'une tension d'accumulateur minimale $U_{cminDES}$ finale et que la tension du circuit intermédiaire $U_{zr}$ ne passe pas en dessous de la tension de réglage $U_{zrDES}$.

**11.** Dispositif selon la revendication 10, **caractérisé en ce que** le dispositif de commande (20) est réalisé pour charger l'accumulateur intermédiaire (2.3) à partir du circuit intermédiaire (1.5) lorsqu'à la fois la tension d'accumulateur $U_c$ passe en dessous d'une tension d'accumulateur maximale $U_{cmaxDES}$ de l'accumulateur intermédiaire (2.3) et que la tension du circuit intermédiaire $U_z$ se situe au-dessus de la tension de référence $U_{zrDEV}$.

**12.** Dispositif selon l'une quelconque des revendications 10 ou 11, **caractérisé en ce que** le dispositif de commande (20) est réalisé pour charger l'accumulateur intermédiaire (2.3) à partir du circuit intermédiaire (1.1) lorsqu'à la fois la tension du circuit intermédiaire U2 se situe au-dessus de la tension de référence $U_{zrDEV}$ et que la tension d'accumulateur $U_c$ se situe en dessous d'une tension d'alimentation de réglage $U_{cmaxDEV}$ de l'accumulateur intermédiaire (2.3) ou qu'à la fois la tension du circuit intermédiaire $U_z$ se situe au-dessus de la tension de réglage $U_{zrDES}$ du circuit intermédiaire (1.5) et que la tension d'accumulateur $U_c$ se situe en dessous d'une tension d'accumulateur maximale $U_{cmaxDES}$.

**13.** Dispositif selon l'une quelconque des revendications 10 à 12, **caractérisé en ce que** le dispositif de commande (20) est réalisé pour soutenir le circuit intermédiaire (1.5) par restitution d'énergie provenant de l'accumulateur intermédiaire (2, 3), lorsqu'à la fois la tension du circuit intermédiaire $U_z$ passe en dessous de la tension de réglage $U_{zrDES}$ et que la tension d'accumulateur $U_c$ passe au-dessus de la tension d'accumulateur minimale $U_{cminDES}$.

**14.** Dispositif selon l'une quelconque des revendications 10 à 13, **caractérisé en ce que** le dispositif de commande (20) est réalisé pour que la tension d'accumulateur minimale $U_{cminDES}$ soit supérieure à la tension d'alimentation de réglage $U_{cmaxDEV}$ ou que la tension d'accumulateur minimale $U_{cminDES}$ soit égale à la tension d'alimentation de réglage $U_{cmaxDEV}$.

**15.** Dispositif selon l'une quelconque des revendications 10 à 14, **caractérisé en ce que** le dispositif de commande (20) est réalisé pour qu'en mode motorisé du moteur (1.3), notamment dans une phase de démarrage et/ou d'accélération, l'énergie provenant de l'accumulateur intermédiaire (2.3) soit restituée pour soutenir le fonctionnement dans le circuit intermédiaire (1.5) jusqu'à atteindre une première tension d'accumulateur minimale $U_{cminDES}$ réglable au niveau de l'accumulateur intermédiaire (2.3).

**16.** Dispositif selon l'une quelconque des revendications 10 à 15, **caractérisé en ce que** le dispositif de commande (20) est réalisé pour que le moteur soit conduit de façon contrôlée à l'arrêt lorsque la tension du circuit intermédiaire $U_z$ passe en dessous de la tension de référence $U_{zrDEV}$ pendant une durée $\Delta t$ prédéfinie et/ou pour une valeur de différence $\Delta U_{zr}$ prédéfinie ou une fonction positive $f(\Delta t, \Delta U_{zr})$ de $\Delta t$ et $\Delta U_{zr}$.

**17.** Dispositif selon l'une quelconque des revendications 10 à 16, **caractérisé en ce que** le dispositif de commande (20) est réalisé pour produire un signal de commande provoquant l'absorption d'énergie et la restitution d'énergie depuis et/ou ou à partir de l'accumulateur intermédiaire.

**18.** Dispositif selon l'une quelconque des revendications 10 à 17, **caractérisé par** des comparateurs (20.5-20.10) comparant la tension $U_z$, $U_c$ mesurée depuis le circuit intermédiaire et l'accumulateur intermédiaire avec des valeurs de tension ($U_{zrDES}$, $U_{zrDEV}$; $U_{cminDES}$, $U_{cmaxDES}$, $U_{cminDEV}$/ $U_{cmaxDEV}$) prédéfinies.

**19.** Dispositif selon l'une quelconque des revendications 10 à 18, **caractérisé par** une unité de réglage (20.15) maître réalisée pour calculer et adapter dynamiquement des valeurs de tension de circuit intermédiaire ($U_{cminDES}$, $U_{cmaxDES}$, $U_{cminDEV}$, $U_{cmaxDEV}$) significatives pour les comparer à des valeurs de tension ($U_z$, $U_c$) mesurées dans le circuit intermédiaire (1.5) et/ou dans l'accumulateur intermédiaire (2.3).

1.1 1.2 1.4 1.5 1.3.1 1.3

L M 3~ =

1.4.1

A ~ 2.1
C B
A ~ B
C

= 3~ N

Fig. 1

Steuereinrichtung

Messung der Zwischenkreisspannung

Leistungsteil

2.2

Steuersignal für die Leistungselektronik

20

Messung des Speicherstroms

Messung der Speicherspannung

2.3

Speicher

Fig. 1a

*Fig. 2*

Fig. 3

*Fig. 4*

Fig. 5

Fig. 5a

Fig. 6

Fig. 7

EP 2 701 299 B1

Fig. 8

Fig. 9

EP 2 701 299 B1

Fig. 10

A — $U_c > U_{cs}$ — Ja → $U_{cs} = U_c$ — B

C — Bremsbit=1 — Nein → D — $U_c > U_{cminDES} + 70$ — Ja → Bremsbit=1 — E

F — $U_c < U_{cminDES} + 20$ — Ja → Bremsbit=0 Bremsende=1 — G

H — Bremsende=1 — Ja → I — $U_{cs} > U_{cmaxDES}$ — Ja

M — $U_{cminDES} = U_{cminDES} + (U_{cmaxDES} - U_{cs})/10$

J — $U_{cminDES} = U_{cminDES} - (U_{cs} - U_{maxDES}) \times 2$

K — $U_{cminDES} < U_{cminEE}$ — Ja → $U_{cminDES} = U_{cminEE}$ — L

N — $U_{cs} = U_{cminDES}$ Bremsende = 0

O — Uabs $= U_{cmaxDES} + (U_{cminDES} - U_{minEE})/2$

Fig. 11

Tek  ⎍⎍  ● Stop  M Pos: −100.0 µs

2＋ ···············································································································································

CH2  100V  M 10.0s  CH1 ↘ 20.0V
6−Dez−11 15:40  <10Hz

*Fig. 12*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2372892 A1
- DE 102011121154
- US 2010192788 A1
- CN 102195284 A